# FASCICULE DE BREVET EUROPEEN

(11) **EP 4 457 507 B1**
(45) Date de publication et mention de la délivrance du brevet: **10.12.2025**
(21) Numéro de dépôt: 22847614.9
(22) Date de dépôt: 26.12.2022
(51) Int. Cl.: G01N 21/90

(54) **PROCEDE ET DISPOSITIF D'INSPECTION DE RECIPIENTS CHAUDS EN VERRE EN VUE D'IDENTIFIER DES DEFAUTS**
VERFAHREN UND VORRICHTUNG ZUR INSPEKTION VON HEISSEN GLASBEHÄLTERN ZUR ERKENNUNG VON DEFEKTEN
METHOD AND DEVICE FOR INSPECTING HOT GLASS CONTAINERS WITH A VIEW TO IDENTIFYING DEFECTS

(30) Priorité: 30.12.2021 FR 2114685
(43) Date de publication de la demande: 06.11.2024
(73) Titulaire: TIAMA, 69230 Saint-Genis-Laval (FR)
(72) Inventeur: COLLE, Olivier, 69600 Oullins (FR); FOUILLOUX, Julien, 69230 Saint-Genis-Laval (FR); GOURGEON, Sylvain, 69440 Mornant (FR)
(74) Mandataire: Cabinet Beau de Loménie
(86) Numéro de dépôt international: PCT/FR2022/052506
(87) Numéro de publication internationale: WO 2023/126609

(56) Documents cités:
- EP-A2- 0 153 565
- EP-A2- 0 926 486
- US-B1- 6 188 079
- US-B1- 6 584 805

## Description

### Domaine Technique

La présente invention concerne le domaine technique de l'inspection en ligne de récipients transparents ou translucides tels que par exemple, des bouteilles, des pots ou des flacons en verre, en vue de leur contrôle qualité afin de déceler et d'identifier d'éventuels défauts susceptibles d'affecter ces récipients.

L'objet de l'invention trouve des applications particulièrement avantageuses pour analyser des caractéristiques physiques des récipients en vue d'identifier des caractéristiques physiques non conformes correspondant à des défauts, comme par exemple des défauts de surface, tels que des plis ou des crevasses, des défauts internes à la matière, tels que des fissures, inclusions, ou bulles, ou encore des défauts dimensionnels du récipient, tels que la répartition de verre.

### Technique antérieure

Pour la fabrication de récipients en verre, il est connu que le procédé de fabrication comprenant la fusion du verre puis son acheminement vers des unités de formage est mis en œuvre au moyen d'une installation de fabrication comprenant un four de fusion, un avant cœur d'amenée de verre fondu vers une machine de formage généralement du type désigné par machine IS. La machine de formage IS comprend un distributeur qui forme des gouttes de verre appelées paraisons et les distribue par des conduits appelés « délivres », vers des sections de formage, à la sortie de laquelle les récipients présentent une haute température typiquement comprise entre 300°C et 600°C. Les récipients qui viennent d'être formés par la machine de formage sont posés successivement sur un convoyeur de sortie pour former une file de récipients. Les récipients sont transportés en file par un convoyeur afin de les acheminer successivement à différents postes de traitement. En particulier les récipients formés sont amenés dans un four de recuisson, qui remonte leur température pour ensuite les refroidir de manière contrôlée afin que disparaissent les contraintes thermiques créées par le processus de formage. D'autres procédés de formage de récipients en verre sont connus pour la verrerie de table, les isolateurs, les seringues et les ampoules. Par exemple, il existe des machines de formage telles que des presses rotatives et séquentielles, et non pas en sections alignées parallèles comme les machines IS. Il existe également, des machines qui transforment des préformes en tubes notamment de verre monocalcique pour réaliser des seringues et ampoules dédiées aux produits pharmaceutiques.

Il est connu d'inspecter systématiquement tous les récipients sortant du four de recuisson à l'aide de différents équipements d'inspection notamment des systèmes d'inspection des parois tels que ceux décrits dans les brevets EP2082216, EP2145175 ou EP2856122. Il est ainsi connu la technique d'inspection des parois en transmission pour laquelle une source de lumière est disposée d'un côté du convoyeur et au moins une caméra (typiquement 2 à 6, 12 ou 24) est disposée à l'opposé pour acquérir au moins une image formée par la lumière transmise à travers les parois du récipient. Selon le brevet EP 1 109 008, il est décrit une méthode d'analyse des images de récipients pour l'inspection à froid. Une étape de segmentation détecte des particularités dans les images et des régions autour des particularités. Des paramètres discriminants d'une région sont calculés et combinés avec une méthode de logique floue pour déterminer le type de particularités les plus probables parmi une liste de particularités correspondant à des défauts possibles. Il est ensuite décidé de la conformité de la région, en appliquant des critères différents selon le type de particularité retenu. Par exemple un défaut de type plis sera éjecté pour une certaine surface alors qu'un défaut de type inclusion sera rejeté même s'il a une surface faible. Ce brevet enseigne notamment que les défauts n'ont pas tous la même criticité, ce qui justifie de chercher à en déterminer la nature avant de décider du rejet d'un récipient.

D'une manière générale, il apparaît intéressant d'identifier un défaut le plus tôt possible dans le processus de fabrication des récipients en verre de sorte à pouvoir le corriger le plus tôt possible au niveau de l'installation de fabrication . Il est ainsi avantageux de détecter notamment des défauts des récipients qui sont directement reliés à des réglages du procédé de formage, afin de corriger, en cas de dérive, le procédé de formage le plus rapidement possible, malgré que cela reste complexe en raison de la non linéarité du système, du nombre de paramètres du procédé, et qu'une cause produit plusieurs effets combinés et que plusieurs causes expliquent un même effet.

C'est la raison pour laquelle l'art antérieur a proposé des méthodes d'observation des récipients encore chauds en défilement sur le convoyeur de sortie de la machine de formage, avec des dispositifs similaires de ceux employés à froid pour l'inspection après l'arche de recuisson. Selon par exemple les brevets EP 0 177 004 et EP 3 516 377, l'inspection des parois est réalisée selon les mêmes méthodes que l'inspection à froid, et ces brevets décrivent en particulier des moyens d'adapter l'inspection à l'environnement particulier du secteur chaud, par un agencement des moyens de gestion de la température environnante élevée. Ainsi une source de lumière située d'un côté de la trajectoire des récipients sur le convoyeur de sortie de la machine de formage, illumine les récipients et au moins une caméra sensible à la lumière émise, acquiert au moins une image en transmission de chaque récipient. Les images sont analysées afin de déterminer les récipients avec un défaut.

Le brevet US 6 584 805 décrit également une installation d'observation des récipients encore chauds en défilement sur le convoyeur de sortie de la machine de formage. Cette installation comporte un poste d'inspection comportant des sources de lumières disposées selon un côté du convoyeur pour illuminer les récipients. Ce poste d'inspection comporte également des caméras disposées selon l'autre côté du convoyeur pour acquérir des images en transmission des récipients illuminés par les sources de lumière. Ce poste d'inspection permet en particulier de mesure le diamètre des récipients à différentes hauteurs des récipients. Ces diamètres mesurés sont comparés à des diamètres de référence afin de déterminer si les récipients sont défectueux ou non.

Les récipients chauds émettant un rayonnement infrarouge, l'art antérieur a proposé également des méthodes d'observation des récipients chauds en défilement sur le convoyeur de sortie, par une caméra infra-rouge en partant du principe que les régions épaisses des récipients rayonnent davantage. Le brevet EP 0 643 297 décrit un dispositif permettant d'effectuer une analyse et un diagnostic sur un procédé de fabrication de produits en verre comportant un capteur sensible au rayonnement infrarouge émis par les objets sortant de la machine de formage. Ce système comporte également un dispositif de traitement numérique comparant le rayonnement à un modèle de référence mathématique afin de déterminer les écarts existants dans la distribution du verre et/ou les causes conduisant à la présence de contraintes thermiques dans le récipient.

Le brevet EP0 679 883 décrit un dispositif d'acquisition d'images par une caméra infrarouge, qui recueille le rayonnement émis par les récipients chauds en sortie de la machine de fabrication. La caméra infrarouge est synchronisée avec le fonctionnement des cavités de formage des récipients. Pour l'inspection, un logiciel de traitement divise l'image du récipient capturée par la caméra infrarouge en régions d'inspection. En segmentant et en mesurant des points clairs ou sombres localisés dans ces régions, il est possible d'identifier des défauts de trapèze et des inclusions.

Selon le brevet DE10030649 connaissant la vitesse du convoyeur de sortie et l'ordre de sorties des récipients des différents sections, il est possible et avantageux de relier les défauts détectés à la cavité d'origine afin de pouvoir agir judicieusement sur le procédé de fabrication pour corriger les défauts.

L'art antérieur enseigne donc d'inspecter au plus tôt les récipients encore chauds afin de régler ou corriger rapidement le procédé de formage. Des contrôles dimensionnels de diamètres ou de hauteurs se font par vision et même selon la demande de brevet WO2021009456, on peut mesurer l'épaisseur de verre par une imagerie infrarouge dans au moins deux gammes particulières de longueur d'onde. Un écart de dimension est un défaut identifié en soi, de hauteur de diamètre, d'inclinaison ou d'épaisseur, et peut être assigné à au moins une cause de dérive du procédé de fabrication.

Le brevet US 6 188 079 propose de mesurer l'épaisseur de verre d'un récipient à partir du rayonnement infrarouge consistant à mesurer une première intensité dudit rayonnement dans une première bande spectrale à laquelle le rayonnement est émis par la matière entre les deux surfaces externe et interne du récipient. La première bande spectrale dont le signal dépend à la fois de la température de verre et de l'épaisseur est de préférence entre 0.4 et 1.1 micron. Le procédé consiste également à mesurer une deuxième intensité dudit rayonnement dans une deuxième bande spectrale à laquelle le rayonnement est émis substantiellement entièrement par une seule surface externe du récipient. Selon ce brevet, la deuxième bande spectrale à laquelle le rayonnement ne dépend que de la température, correspondant à un rayonnement de surface, est de préférence entre 4.8 et 5 microns. Le procédé consiste à déterminer l'épaisseur du récipient entre les surfaces externe et interne en tant que fonction combinée desdites première et deuxième intensités mesurées. En d'autres termes, l'épaisseur et la température sont déterminées à partir des deux mesures de rayonnement prises dans la première bande spectrale et dans la deuxième bande spectrale.

La situation est différente concernant ce que l'on désignera « défauts d'aspect», à savoir les défauts visuels de tout type : inclusions (de corps étrangers tels que céramiques, métal), bulles, plis, rivières (rainures de surface), glaçures (fissures), ailettes, trapèzes, taches de graisse, zones très minces, infondus. Ces défauts d'aspect se manifestent dans les images par des variations optiques locales, ou des pixels ayant des écarts par rapport à l'arrière-plan. Ces défauts d'aspect peuvent être critiques s'ils conduisent à un risque pour le consommateur, un risque de casse ou une perte de fonctionnalité du récipient. Toutefois, la reconnaissance d'un défaut d'aspect d'après une image peut être ambiguë. Il s'ensuit en raison des marges de sécurité mises en œuvre lors de la détection, que des récipients sont considérés comme défectueux alors que ces récipients sont conformes.

Par ailleurs, il est à noter que dans les images peuvent être distingués des artefacts acceptables tels que par exemple des gravures ou des décors, des joints de moule faiblement marqués. Aussi, il apparait le besoin d'identifier exactement la nature des défauts d'aspects pour identifier les défauts critiques en les distinguant des autres défauts. La prévention des défauts critiques nécessite d'améliorer la fiabilité de classification des défauts d'aspect. Outre le fait que l'amélioration de l'identification des défauts améliore le rendement de la production, cette identification des défauts permet de déterminer leurs causes potentielles de sorte que l'installation de fabrication peut être pilotée en fonction de la catégorie des défauts détectés. En effet, sans identification fiable des défauts détectés, aucune décision sûre de correction du procédé de fabrication ne peut être prise, que ce soit manuellement ou automatiquement.

### Exposé de l'invention

La présente invention vise à remédier aux inconvénients de l'art antérieur en proposant une méthode de contrôle de la qualité des récipients chauds en verre, conçue pour réaliser une détection plus efficace des défauts en particulier d'aspects tout en assurant leur identification sûre et certaine pour donner une information plus complète sur les corrections à apporter aux paramètres de contrôle d'un procédé de fabrication de récipients en verre d'une installation de fabrication.

L'objet de l'invention concerne un procédé d'inspection de récipients en verre encore chauds sortant d'une installation de fabrication, en vue d'identifier pour un récipient, un type de défauts, le procédé consistant pour chaque récipient:
- à acquérir au moins une image en transmission du récipient illuminé par une source d'une lumière traversant le récipient et au moins une image de rayonnement infrarouge du récipient,
- à analyser au moins une image en transmission et au moins une image de rayonnement infrarouge,
- à assurer une mise en correspondance d'au moins une partie de l'image en transmission et d'au moins une partie de l'image de rayonnement infrarouge,
- à classifier le récipient, à partir d'au moins une image en transmission et d'au moins une image de rayonnement infrarouge, mises en correspondance, afin d'identifier pour un récipient, au moins un type de défauts.

Selon une caractéristique avantageuse de réalisation, on illumine le récipient par une source de lumière dont le spectre d'émission est dans une gamme de longueur d'onde inférieure à 0,8 µm, et on acquiert l'image de rayonnement infrarouge d'un récipient dans une gamme de longueur d'onde supérieur à 0,8 µm.

Par exemple, on acquiert l'image de rayonnement infrarouge d'un récipient lorsque la source de lumière est éteinte.

Selon un autre exemple de mise en œuvre, on acquiert l'image de rayonnement infrarouge selon une direction d'observation telle qu'on ne capte pas, avec le rayonnement infrarouge du récipient, la lumière émise par la source de lumière.

Selon une caractéristique de l'invention, pour assurer la mise en correspondance des images en transmission et des images de rayonnement infrarouge, le procédé détecte des régions candidates dans les images en transmission et dans les images de rayonnement infrarouge, le procédé assurant, pour chaque récipient :
- une mise en correspondance des régions candidates des images en transmission ou des régions candidates des images de rayonnement infrarouge avec les régions correspondantes respectivement des images de rayonnement infrarouge et des images en transmission , en fonction de leur position sur le récipient,
- ou une mise en correspondance des régions candidates des images en transmission avec les régions candidates des images de rayonnement infrarouge.

Selon une variante de réalisation, le procédé assure en tant que mise en correspondance, une fusion des images en transmission et des images de rayonnement infrarouge pour obtenir une image composite, le procédé assurant :
- une extraction de caractéristiques de classification de l'image composite, exprimant des critères de classification en transmission et en rayonnement,
- et une classification du récipient à l'aide des critères de classification en transmission et en rayonnement.

Selon une autre variante de réalisation, le procédé assure en tant que mise en correspondance, une fusion des images en transmission et des images de rayonnement infrarouge pour obtenir une image composite, le procédé assurant :
- une segmentation des images composites pour détecter des régions candidates composites,
- une extraction de caractéristiques de classification des régions candidates composites, exprimant des critères de classification en transmission et en rayonnement,
- une classification du récipient à l'aide des critères de classification en transmission et en rayonnement des régions candidates composites.

Selon une caractéristique de l'invention:
- on extrait des images en transmission, des critères de classification en transmission,
- on extrait des images de rayonnement infrarouge, des critères de classification en rayonnement,
- on classifie le récipient à l'aide des critères de classification en transmission et en rayonnement.

Avantageusement, on choisit des critères de classification en rayonnement pour les images de rayonnement infrarouge et des critères de classification en transmission pour les images en transmission, et/ou des critères composites qui prennent en compte des caractéristiques combinant de manière logique ou mathématique des images en transmission et des images de rayonnement infrarouge, ces critères de classification en rayonnement et en transmission étant des critères de position, de taille, de forme ou de photométrie.

De manière avantageuse, le procédé consiste à classifier le récipient par un classifieur à apprentissage supervisé dont les données d'entrées sont :
- les critères de classification en rayonnement et en transmission,
- ou les images de rayonnement et les images en transmission,
- ou des parties des images en rayonnement et des parties des images en transmission.

Selon un exemple de mise en œuvre, le procédé consiste à classifier le récipient par un classifieur à apprentissage supervisé dont les données d'entrées sont au moins une image composite obtenue par fusion d'au moins une image de rayonnement avec au moins une image de transmission d'un récipient ou par fusion de régions d'au moins une image en rayonnement avec des régions correspondantes d'au moins une image en transmission.

Selon un autre exemple de mise en œuvre, le procédé consiste à classifier le récipient par un classifieur à apprentissage supervisé entraîné par une base de données d'apprentissage constituée d'un ensemble d'enregistrements comportant chacun pour un récipient exemple observé:
- au moins une image de rayonnement du récipient, au moins une image en transmission du récipient et au moins une étiquette attribuant au récipient exemple au moins une classe d'objet parmi une liste de classes possibles telles que des types de défauts,
   ou
- au moins une région d'image de rayonnement du récipient exemple, au moins une région d'image en transmission du récipient exemple et au moins une étiquette attribuant à la région correspondante du récipient exemple au moins une classe d'objet parmi une liste de classes possibles telles que des types de défauts.

Selon une caractéristique avantageuse de l'invention, le procédé vise à classifier chaque récipient selon au moins une classe d'objet parmi une liste de classes possibles contenant au moins des types de défauts, la liste de classes possibles comportant au moins: non défaut, trapèze, inclusion, bulle.

Selon une caractéristique avantageuse du procédé, est mise en œuvre une étape de prise en compte d'au moins un type de défaut détecté pour en déduire une information d'ajustement pour au moins un paramètre de contrôle de l'installation de fabrication.

Un autre objet de l'invention est de proposer un dispositif d'inspection de récipients en verre encore chauds sortant d'une installation de fabrication en vue d'identifier pour un récipient, un type de défauts, le dispositif comportant:
- un système d'acquisition d'images en transmission des récipients et d'images de rayonnement infrarouge des récipients,
- une unité de traitement d'informations reliée au système d'acquisition d'images, cette unité de traitement d'informations étant configurée pour comporter:
   * un système d'analyse d'au moins une image en transmission et d'au moins une image de rayonnement infrarouge du récipient,
   * un système de mise en correspondance d'au moins une région d'une image en transmission et d'au moins une région d'au moins une image de rayonnement infrarouge du récipient,
   * un classifieur du récipient, à partir d'au moins une région d'au moins une image en transmission et d'au moins une région d'au moins une image de rayonnement infrarouge, mises en correspondance, afin d'identifier pour un récipient, au moins un type de défauts.

Selon un exemple de réalisation, le système d'acquisition d'images en transmission des récipients et d'images de rayonnement infrarouge des récipients comporte d'une part, une caméra sensible au rayonnement infrarouge émis par les récipients et munie d'un objectif et d'autre part, une source d'une lumière traversant les récipients et une caméra sensible à la lumière transmise par les récipients et munie d'un objectif.

Avantageusement, le système d'acquisition d'images comporte un système de sélection de la lumière émise par la source de lumière et positionné pour éliminer, du rayonnement capté par la caméra sensible au rayonnement infrarouge, la lumière émise par la source de lumière.

Par exemple, le système d'acquisition d'images en transmission des récipients et d'images de rayonnement infrarouge des récipients comporte :
- une source de lumière illuminant les récipients,
- un capteur sensible au rayonnement infrarouge émis par les récipients,
- un capteur sensible à la lumière émise par la source de lumière et transmise par les récipients,
- un objectif optique commun de récupération du rayonnement infrarouge émis par les récipients et de la lumière transmise par les récipients, cet objectif optique étant associé à un système optique de séparation et de filtration pour éliminer la lumière émise par la source de lumière, du rayonnement reçu par le capteur sensible au rayonnement infrarouge

Selon une caractéristique de mise en œuvre, l'unité de traitement d'informations est reliée :
- à un éjecteur pour commander l'éjection de récipients identifiés comme défectueux, et/ou
- une unité d'affichage pour présenter à un opérateur les défauts identifiés, les images en transmission et les images de rayonnement infra-rouge des récipients.

Typiquement, l'unité de traitement d'informations est reliée à un calculateur de production supervisant l'installation de fabrication afin de :
- recevoir du calculateur de production, des informations temporelles permettant d'associer les récipients, leurs images et leurs défauts détectés au numéro de moule ou à la cavité de formage,
- transmettre au calculateur de production, les défauts identifiés et mesures effectuées, afin que le calculateur de production puisse déduire automatiquement une information d'ajustement pour au moins un paramètre de contrôle de l'installation de fabrication.

### Brève description des dessins

[Fig. 1] La figure 1 est une vue simplifiée d'un dispositif conforme à l'invention permettant d'inspecter des récipients en verre encore chauds sortant d'un exemple d'une installation de fabrication.
[Fig. 2] La figure 2 représente un exemple de réalisation d'un système d'acquisition d'images pour les récipients sortant d'une installation de fabrication et mis en œuvre dans le dispositif d'inspection conforme à l'invention.
[Fig. 3] La figure 3 représente un autre exemple de réalisation d'un système d'acquisition d'images pour les récipients sortant d'une installation de fabrication et mis en œuvre dans le dispositif d'inspection conforme à l'invention.
[Fig. 4] La figure 4 est un schéma bloc fonctionnel simplifié d'un exemple d'un premier mode de réalisation du dispositif d'inspection conforme à l'invention, mettant en œuvre un traitement dit conventionnel, des informations contenues dans les images en transmission et dans les images de rayonnement infrarouge.
[Fig. 5] La figure 5 est un schéma bloc fonctionnel simplifié d'un exemple d'un premier mode de réalisation du dispositif d'inspection conforme à l'invention, mettant en œuvre une opération de segmentation sur une image composite obtenue par la mise en correspondance d'une image en transmission et d'une image de rayonnement infrarouge.
[Fig. 6] La figure 6 est un schéma bloc fonctionnel simplifié d'un exemple d'un premier mode de réalisation du dispositif d'inspection conforme à l'invention, mettant en œuvre un réseau de neurones convolutif ayant comme données d'entrée, des régions candidates mises en correspondance et issues d'opérations de segmentation d'une image en transmission et d'une image de rayonnement infrarouge.
[Fig. 7] La figure 7 est un schéma bloc fonctionnel simplifié d'un exemple d'un premier mode de réalisation du dispositif d'inspection conforme à l'invention, mettant en œuvre deux réseaux de neurones convolutifs ayant comme données d'entrée, une région candidate issue d'une opération de segmentation d'une image en transmission ou d'une image de rayonnement infrarouge.
[Fig. 8] La figure 8 est un schéma bloc fonctionnel simplifié d'un exemple d'un deuxième mode de réalisation du dispositif d'inspection conforme à l'invention, mettant en œuvre un réseau de neurones convolutif ayant comme données d'entrée, une image composite d'une image en transmission et d'une image de rayonnement infrarouge.
[Fig. 9] La figure 9 est un schéma bloc fonctionnel simplifié d'un exemple d'un deuxième mode de réalisation du dispositif d'inspection conforme à l'invention, mettant en œuvre des réseau de neurones convolutif ayant comme données d'entrées, tout ou partie d'une image en transmission et d'une image de rayonnement infrarouge, sans segmentation préalable.
[Fig. 10A] [Fig. 10B] [Fig. 10C] La figure 10A est une image simulée en transmission montrant un défaut tandis que la figure10B et la figure 10C sont des images simulées en infrarouge représentant le même défaut s'il s'agit respectivement d'une cavité remplie ou s'il s'agit de verre collé.
[Fig. 11A] [Fig. 11B] [Fig. 11C] La figure 11A est une image en transmission montrant un défaut tandis que la figure 11B et la figure 11C sont des images simulées en infrarouge représentant le même défaut s'il s'agit respectivement d'un morceau de verre ou s'il s'agit d'une tache de graisse.
[Fig. 12A] [Fig. 12B] La figure 12A est une image en infrarouge tandis que la figure 12B est une image en transmission montrant un exemple de confusion possible entre des défauts pierre et bouillon.
[Fig. 13A] [Fig. 13B] La figure 13A est une image en infrarouge tandis que la figure 13B est une image en transmission montrant un autre exemple de confusion possible entre des défauts petits bouillon et pierre.
[Fig. 14A] [Fig. 14B] La figure 14A est une image en infrarouge tandis que la figure 14B est une image en transmission montrant un autre exemple de confusion possible entre des défauts bouillon et pierre.

### Description des modes de réalisation

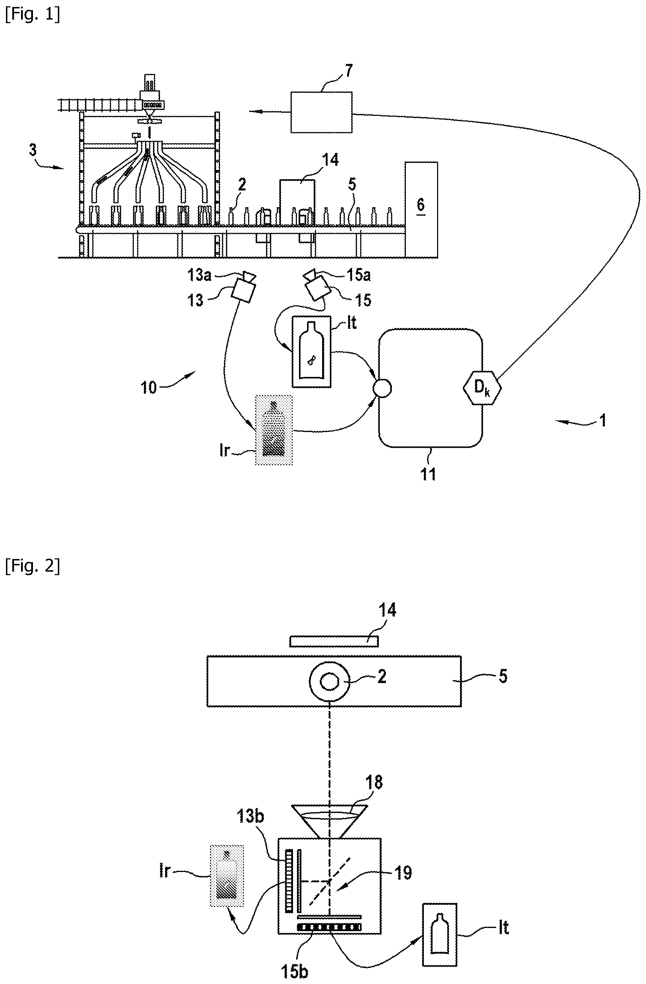

La figure 1 illustre un dispositif 1 conforme à l'invention permettant d'inspecter des récipients 2 en verre encore chauds sortant d'une installation de fabrication ou de formage 3 de tous types connus en soi. Le dispositif d'inspection 1 vise à détecter pour chaque récipient, si le récipient présente un défaut et à identifier pour un récipient présentant un défaut, un type de défaut parmi une famille de défauts.

En sortie de l'installation de fabrication 3, les récipients 2 tels que dans l'exemple illustré, des bouteilles ou des flacons en verre, présentent une haute température typiquement comprise entre 300°C et 600°C. De manière connue, les récipients 2 qui viennent d'être formés par l'installation 3 sont pris en charge par un convoyeur de sortie 5 pour former une file de récipients en étant dans l'exemple illustré, posés successivement sur le convoyeur de sortie. Les récipients 2 sont transportés en file par le convoyeur 5 selon une direction de transfert afin de les acheminer successivement à différents postes de traitement et en particulier une arche de recuisson, en amont de laquelle est placée une hotte de traitement de surface 6 constituant généralement le premier des postes de traitement après le formage. Avantageusement, le dispositif d'inspection 1 conforme à l'invention inspecte les récipients encore chauds en amont du premier poste de traitement de surface à savoir la hotte de traitement de surface 6.

L'installation de fabrication 3 est connue en soi et un exemple sera décrit de manière succincte pour uniquement permettre une compréhension de l'interaction entre le dispositif d'inspection 1 conforme à l'invention et l'installation de fabrication 3.

L'installation de fabrication 3 comporte un calculateur de production 7 permettant de superviser les différentes fonctionnalités de l'installation de formage 3. Classiquement, l'installation de fabrication 3 comporte plusieurs sections de formage distinctes fonctionnant en parallèle et délivrant successivement au moins un récipient en verre. Dans l'exemple de la machine IS, les différentes sections de formage distinctes comportent chacune au moins un moule ébaucheur recevant une paraison de verre et au moins un moule finisseur. De manière connue, il est possible d'identifier la section de formage, le moule ébaucheur et le moule finisseur d'où est issu chaque récipient 2, l'ordre de défilement des récipients étant connu pour une production donnée.

Le système d'inspection 1 conforme à l'invention comporte un système d'acquisition 10 d'images en transmission It des récipients 2 et d'images de rayonnement infrarouge Ir des récipients 2 et une unité électronique de traitement d'informations 11 reliée au système d'acquisition 10. Cette unité électronique de traitement d'informations 11 est un système informatique de tous types comportant ordinateurs, périphériques externes (unité d'affichage, claviers...), programmes, bases de données, etc. Cette unité de traitement d'informations 11 est reliée au calculateur de production 7 afin de recevoir si besoin du calculateur de production, des informations temporelles permettant d'associer les récipients 2, leurs images et leurs défauts détectés au numéro de moule ou à la cavité de formage. Typiquement, le fonctionnement du système d'acquisition d'images 10 est synchronisé avec le fonctionnement des cavités de formage des récipients. Par ailleurs, cette unité de traitement d'informations 11 transmet au calculateur de production 7, les défauts identifiés et les mesures effectuées, afin que le calculateur de production puisse déduire automatiquement une information d'ajustement pour au moins un paramètre de contrôle de l'installation de fabrication 3. Un tel ajustement des paramètres de contrôle est réalisé de manière manuelle ou automatique. Enfin, l'unité de traitement d'informations 11 est reliée à un éjecteur pour commander l'éjection de récipients identifiés comme défectueux, et/ou à une unité d'affichage pour présenter à un opérateur les défauts identifiés, les images en transmission et les images de rayonnement infrarouge des récipients.

Le système d'acquisition 10 permet d'observer chaque récipient 2, selon deux modalités à savoir l'émission infrarouge d'un récipient chaud et la transmission d'une lumière traversant le même récipient. Le système d'acquisition 10 d'images en transmission des récipients et d'images de rayonnement infrarouge des récipients peut être réalisé de toute manière appropriée. Selon l'exemple illustré à la figure 1, le système d'acquisition 10 comporte d'une part, une caméra 13 sensible au rayonnement infrarouge émis par les récipients 2 et munie d'un objectif 13a et d'autre part, une source 14 d'une lumière traversant les récipients et une caméra 15 sensible à la lumière transmise par les récipients et munie d'un objectif 15a.

Selon une caractéristique avantageuse de réalisation, le système d'acquisition 10 comporte un système de sélection de la lumière émise par la source de lumière 14 et positionné pour éliminer, du rayonnement capté par la caméra 13 sensible au rayonnement infrarouge, la lumière émise par la source 14. En d'autres termes, le dispositif d'acquisition 10 est configuré de manière que la caméra 13 sensible au rayonnement infrarouge capte uniquement le rayonnement infrarouge du récipient inspecté. Bien entendu, ce but peut être atteint de différentes manières.

Par exemple, l'image de rayonnement infrarouge d'un récipient est acquise lorsque la source de lumière 14 est éteinte. Selon un autre exemple de mise en œuvre, l'image de rayonnement infrarouge est acquise selon une direction d'observation telle qu'avec le rayonnement infrarouge du récipient, la lumière émise par la source de lumière 14 n'est pas captée, comme dans l'exemple illustré à la figure 1. Selon un autre exemple de réalisation, la source de lumière 14 ne rayonne pas dans le spectre de sensibilité du capteur de la caméra 13 sensible au rayonnement infrarouge. Selon une caractéristique de l'invention, le spectre d'émission de la source de lumière 14 est dans une gamme de longueur d'onde inférieure à 0,8 µm, et le capteur de la caméra 13 sensible au rayonnement infrarouge capte le rayonnement infrarouge dans une gamme de longueur d'onde supérieure à 0,8 µm.

Le système d'acquisition 10 peut également comporter des filtres optiques de manière que la caméra 13 sensible au rayonnement infrarouge capte uniquement le rayonnement infrarouge du récipient inspecté. Ces filtres optiques peuvent être montés en tous endroits entre la source de lumière 14 et la caméra 13 sensible au rayonnement infrarouge.

La figure 2 illustre un autre exemple de réalisation dans lequel le système d'acquisition 10 comporte la source de lumière 14 illuminant les récipients 2, un capteur 13b sensible au rayonnement infrarouge émis par les récipients 2 et un capteur 15b sensible à la lumière émise par la source de lumière 14 et transmise par les récipients. Le système d'acquisition 10 comporte également un objectif optique commun 18 de récupération du rayonnement infrarouge émis par les récipients et de la lumière transmise par les récipients. Cet objectif optique 18 est associé à un système optique 19 de séparation et de filtration pour éliminer la lumière émise par la source de lumière 14, du rayonnement reçu par le capteur 13b sensible au rayonnement infrarouge.

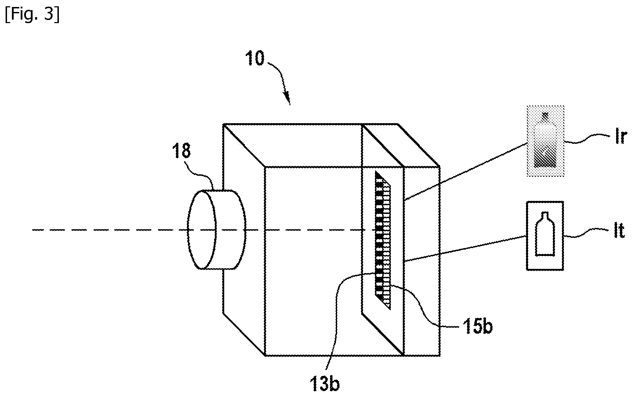

La figure 3 illustre une autre variante de réalisation du système d'acquisition 10 comportant une caméra avec un objectif commun 18 de récupération du rayonnement infrarouge émis par les récipients et de la lumière transmise par les récipients. Le système d'acquisition 10 comporte également deux capteurs linéaires juxtaposés, situés dans le plan focal de la caméra, l'un des capteurs 13b étant sensible au rayonnement infrarouge tandis que l'autre capteur 15b est sensible à la lumière émise par la source 14. Les capteurs linéaires 13b, 15b sont disposés de manière alignée à l'axe de symétrie des récipients, c'est-à-dire verticalement. Bien entendu, le système d'acquisition 10 comporte également un système de sélection de la lumière émise par la source de lumière 14 et positionné pour éliminer, du rayonnement capté par le capteur 13b sensible au rayonnement infrarouge, la lumière émise par la source 14.

Le système d'acquisition 10 prend pour chaque récipient 2, une ou plusieurs images en transmission It et images de rayonnement infrarouge Ir, chacune de ces images étant bidimensionnelles. Les images acquises sont traitées par l'unité de traitement d'informations 11 configurée pour comporter:
* un système d'analyse d'au moins une image en transmission It et d'au moins une image de rayonnement infrarouge Ir,
* un système de mise en correspondance d'au moins une région d'une image en transmission et d'au moins une région d'au moins une image de rayonnement infrarouge,
* un classifieur du récipient, à partir d'au moins une région d'au moins une image en transmission et d'au moins une région d'au moins une image de rayonnement infrarouge, mises en correspondance, afin d'identifier pour un récipient, au moins un type de défauts.

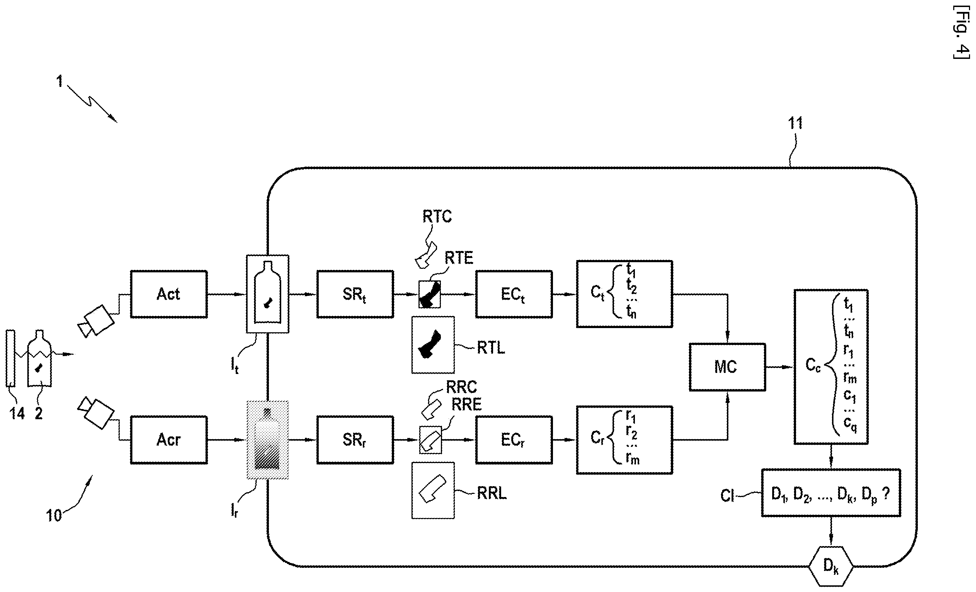

L'unité de traitement d'informations 11 est ainsi adaptée pour mettre en œuvre un procédé d'inspection pour détecter des défauts sur des récipients tout en assurant l'identification, pour un récipient, d'un type de défauts parmi une famille de défauts. Tel que cela ressort des figures 4 à 9, le procédé d'inspection selon l'invention consiste pour chaque récipient, à mettre en œuvre, une opération d'acquisition Act d'au moins une image en transmission It du récipient 2 illuminé par la source 14 d'une lumière traversant le récipient et une opération d'acquisition Acr d'au moins une image de rayonnement infrarouge du récipient. Bien entendu, cette opération d'acquisition des images peut concerner la totalité des récipients ou une partie seulement des récipients.

Le procédé selon l'invention consiste ensuite à mettre en œuvre des opérations d'analyse d'au moins une image en transmission et d'au moins une image de rayonnement infrarouge. Le procédé selon l'invention consiste ensuite à assurer une opération ou étape de mise en correspondance MC d'au moins une partie de l'image en transmission It et d'au moins une partie de l'image de rayonnement infrarouge Ir. Le procédé consiste ensuite à mettre en œuvre une étape de classification CI, à partir des informations contenues dans au moins une image en transmission et dans au moins une image de rayonnement infrarouge, mises en correspondance, afin d'identifier pour un récipient, au moins un type de défauts Dk.

Selon un premier mode de réalisation mis en œuvre dans les exemples de réalisation des figures 4 à 7, les opérations d'analyse visent à traiter les images de façon à en extraire, en cas de présence d'une particularité visible ou d'un objet, une région correspondant à cet objet. Un objet d'une image numérique est généralement un ensemble de pixels connexes possédant une propriété commune que ne possèdent pas les ensembles voisins. Un objet est donc entouré d'un contour fermé et est reconnu comme tel à partir uniquement de propriétés de l'image : niveau de gris, etc.

Un objet correspond à une zone ou région d'une image présentant potentiellement un défaut. Une région avec un objet appelée aussi région candidate, présente un objet que l'on peut classer comme appartenant à une classe d'objet parmi une liste de classes possibles comportant notamment des types de défauts. La liste des classes d'objets est par exemple la suivante :
- marque du joint du moule de formage du récipient, ombre, décor, blason, code, qui ne sont pas des défauts ;
- pli, rivière, frottoir, peau d'orange ou crevasse qui sont des défauts de surface ;
- ailette, trapèze, col bouché, qui sont de défauts de forme ;
- fissure, inclusion, bouillon, pierre, bulle, qui sont des défaut interne à la matière ;
- mince qui est une zone de répartition de verre pauvre.

Selon cette approche plus précise, le procédé selon l'invention vise à classifier chaque récipient dans au moins une classe appartenant à une famille de classes dont certaines des classes comportent des types de défauts.

Selon l'invention, la classification des récipients se réalise à travers la classification de leurs images ou portions d'image en transmission It et de rayonnement infrarouge Ir. Il est à noter que fréquemment un même récipient porte plusieurs défauts différents. Bien évidemment, selon l'invention on peut classifier une première région du récipient en fonction d'une première portion d'image en transmission It et d'une première portion d'image de rayonnement infrarouge Ir correspondant à cette première portion de récipient, et également pour le même récipient, classifier une deuxième région du récipient en fonction d'une deuxième portion d'image en transmission It et d'une deuxième portion d'image de rayonnement infrarouge Ir correspondant à cette deuxième portion de récipient.

Selon l'invention, la classification des récipients ou des images ou portions d'images a pour objectif de permettre de sécuriser la production, corriger rapidement une erreur du procédé. Cet avantage est particulièrement significatif dans le cas d'apparition dans le procédé d'un défaut critique appelé trapèze ou balançoire. Ce défaut est un fil de verre à l'intérieur du récipient et relié par ses extrémités à la paroi intérieure. Les trapèzes les plus typiques sont traversant de part en part, avec une forme de corde lâche en arc incurvé vers le bas. Ce défaut peut se casser et conduire à des débris de verre dans le futur liquide embouteillé. Il présente un danger pour le consommateur. En conséquence il est considéré comme critique et ne doit absolument pas être livré de récipient portant un trapèze. Ce filtrage est opéré avec succès par les inspections à froid ou à chaud, visible ou infra-rouge. En revanche pour permettre de réagir sur le procédé de fabrication, il est nécessaire de détecter le défaut de préférence à chaud et de le reconnaître. Or si ce défaut est détecté parce qu'il présente une particularité dans les images, il se trouve qu'il est très polymorphe : parfois le fil est absent et on ne voit que l'une ou les deux attaches, parfois il n'a pas la forme d'arc typique, etc. Selon l'invention, grâce à la classification sur la base des deux images des modalités en transmission et de rayonnement infrarouge, on peut reconnaître les trapèzes car au moins une image en transmission (on en fait généralement deux selon des angles différents d'observation) révèle avec précision la forme d'aiguille du défaut au niveau des attaches tandis que l'image en rayonnement infrarouge informe qu'il y a un excès de verre. En effet, on préfère utiliser un rayonnement infra-rouge traversant le verre et sensible à l'épaisseur. On peut donc immédiatement informer un opérateur qui agit et/ou agit automatiquement sur le procédé de fabrication, par exemple en corrigeant la température d'ébauche ou le mouvement de l'inverseur. Selon l'invention, le trapèze fait donc partie de la liste de classes d'objets possibles.

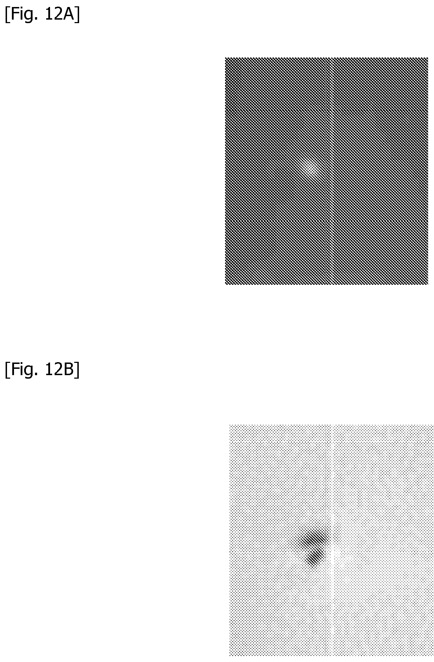

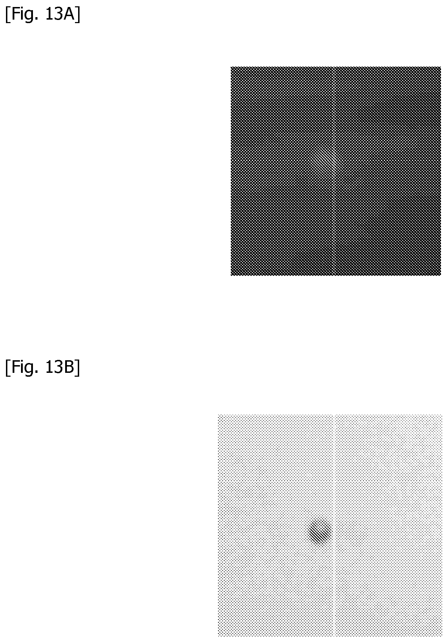

Une autre illustration de l'intérêt de l'identification par la classification des défauts est que les petites inclusions notamment de céramique se confondent souvent dans une seule des modalités d'observation avec les petites bulles d'air. Cette confusion est gênante car ces défauts n'ont pas la même gravité et pas la même cause dans le procédé de fabrication. Comme on le verra plus loin dans les figures 12A-12B et 13A-13B, la classification sur la base des images selon les deux modalités en transmission et de rayonnement infrarouge, permet de les distinguer et donc d'agir correctement sur le procédé, par exemple en cas de bulles d'air ou vapeur, d'améliorer l'affinage du verre ou la lubrification des ciseaux et des conduits appelés « délivres ».

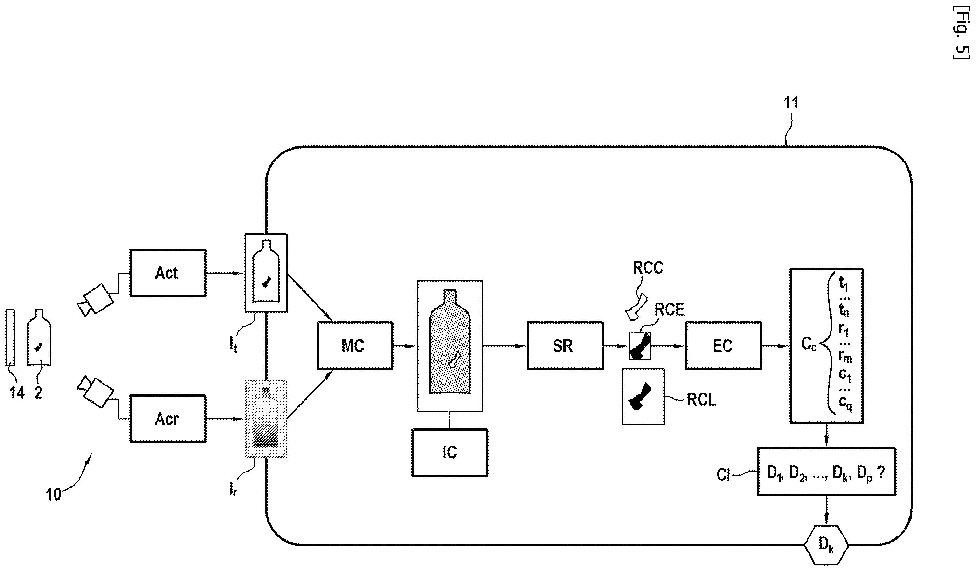

Les opérations d'analyse des images en transmission It et des images de rayonnement infrarouge Ir numérique mettent en œuvre des opérations connues en soi, notamment de filtrage et de segmentation, réalisées de façon à extraire toutes régions avec un objet. Ainsi, le procédé met en œuvre une opération SRt de segmentation et de détection de régions candidates sur les images en transmission It et une opération SRr de segmentation et de détection de régions candidates sur les images de rayonnement infrarouge Ir (figures 4, 6 et 7). Selon l'exemple de réalisation illustré à la figure 5, une opération SR de segmentation et de détection de régions candidates est réalisée sur une image composite d'une image en transmission It et d'une image de rayonnement infrarouge Ir comme cela sera expliqué dans la suite de la description.

Une opération de segmentation consiste classiquement à découper l'image en régions ou segments, c'est-à-dire à affecter aux pixels une appartenance à une région. Cette opération de segmentation vise à déterminer les régions candidates dans chaque image, par des opérations de filtrage, seuillage, suivi de contour, etc. en vue généralement mais pas nécessairement de mesurer des paramètres qui caractérisent ces régions. Cette opération de segmentation des images est réalisée selon une méthode de filtrage adaptée à la modalité c'est-à-dire aux images en transmission It et aux images de rayonnement infrarouge Ir.

Ces opérations de segmentation SRt, SRr, SR permettent de détecter des régions d'images candidates définies par leur contour limité à l'objet, ces régions d'images candidates RTC, RRC et RCC étant respectivement en transmission, en rayonnement infrarouge ou composites en transmission et rayonnement infrarouge. Il est aussi possible que ces opérations de segmentation SRt, SRr, SR permettent de détecter des régions d'images candidates définies par son rectangle encadrant l'objet RTE, RRE, RCE, ces régions d'images candidates étant respectivement en transmission, en rayonnement infrarouge ou composites en transmission et rayonnement infrarouge. Il est aussi possible que ces opérations de segmentation SRt, SRr,SR permettent de détecter des régions d'images candidates définies par son rectangle élargi encadrant l'objet RTL, RRL, RCL, de manière à prendre en compte le contexte de l'objet, ces régions d'images candidates étant respectivement en transmission, en rayonnement infrarouge ou composites en transmission et rayonnement infrarouge.

Le procédé selon l'invention met en œuvre une opération MC de mise en correspondance des régions candidates des images en transmission ou des régions candidates des images de rayonnement infrarouge avec les régions correspondantes respectivement des images de rayonnement infrarouge et des images en transmission, en fonction de leur position sur le récipient. Cette mise en correspondance peut également concerner les régions candidates des images en transmission avec les régions candidates des images de rayonnement infrarouge.

Cette opération MC de mise en correspondance vise à assurer une mise en correspondance des régions dans les deux images en comparant leurs positions respectives sur le récipient. Dans le cas le plus général, on détermine une transformation géométrique d'une image à l'autre, qui permet, partant d'une région ou d'un pixel d'une image de récipient, de localiser une région ou un pixel de l'autre image correspondant à la même région ou partie élémentaire du récipient. La transformation géométrique est de tout type nécessaire et comporte par exemple, une translation/rotation, une anamorphose, un changement d'échelle, etc.

Selon une variante de réalisation, on fait une mise en correspondance pixel à pixel de deux images ou régions d'image d'un récipient. Pour ce faire la transformation géométrique est déterminée pour tous les pixels. Il est également possible de calculer pour une des deux images, ou portion d'image, une image transformée qui est superposable à l'autre image ou portion d'image. On applique alors à tous les pixels de la région concernée la transformation géométrique ainsi que des interpolations, par exemple bilinéaires, des valeurs de pixels.

Dans le cas où les images en transmission et les images en rayonnement infrarouge se correspondent pixel à pixel en raison du système d'acquisition d'images 10, la mise en correspondance est directe. Dans ce cas, le dispositif d'acquisition doit être construit de manière très précise pour que les capteurs des caméras possèdent le même champ, grandissement, direction d'observation et résolution en pixels par mm, de sorte que la mise en correspondance est déjà réalisée car les pixels de chaque image en transmission et de rayonnement infrarouge correspondent à la même portion élémentaire de surface du récipient. Bien entendu tout écart à cette situation idéale peut être compensé par une mise en correspondance utilisant une transformation géométrique adaptée.

Selon une autre variante de réalisation, on met en correspondance des régions dont le milieu, ou le centre de gravité sont proches sur le récipient, c'est-à-dire se correspondent ou sont voisins par la transformation géométrique. Ou bien on met en correspondance des régions dont les rectangles encadrant l'objet RTE, RRE, RCE ou rectangles élargis encadrant l'objet RTL, RRL, RCL, s'intersectent ou se chevauchent sur le récipient dans une certaine proportion de surface donnée.

Aussi, cette mise en correspondance MC peut être réalisée soit de régions candidates à régions candidates ou soit de pixel à pixel comme dans l'exemple de réalisation illustré.

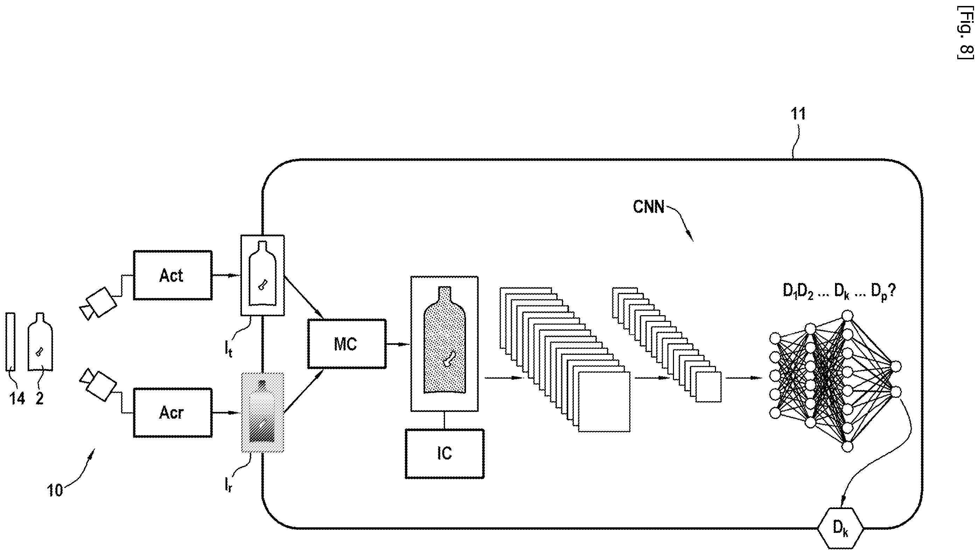

Selon les exemples de réalisation illustrés aux figures 5 et 8, il est réalisé une image composite IC avec mise en correspondance d'une image ou portion d'image en transmission It et d'une image ou portion d'image en rayonnement Ir. Le procédé assure ainsi, en tant que mise en correspondance, une fusion des images en transmission et des images de rayonnement infrarouge pour obtenir l'image composite IC. L'opération de mise en correspondance MC peut concerner la totalité des images en transmission et en rayonnement infrarouge ou seulement des parties de ces images. Cette mise en correspondance MC se fait pixel à pixel comme expliqué précédemment. A chaque pixel pc(x,y) de coordonnées x, y de l'image composite est attribué une valeur qui dépend de la transmission obtenue de l'image en transmission It et du rayonnement infrarouge obtenu de l'image en rayonnement Ir. Cette valeur est par exemple soit un scalaire pc(x,y) de 16 bits avec 8 bits de transmission et 8 bits de rayonnement infrarouge ou soit un vecteur vc(x,y) dont les composantes { vt(x,y), vr(x,y)} sont chacune un scalaire en transmission et un scalaire en rayonnement infrarouge. Le plus simple consiste à relever directement la valeur d'un pixel de l'image en transmission It et d'un pixel mis en correspondance de l'image en rayonnement Ir. Toutefois il est possible de construire chaque pixel composite à partir de combinaison de plusieurs pixels voisins dans les images, ou de valeurs interpolées.

Selon les exemples de réalisation illustrés aux figures 4, 6 et 7, la mise en correspondance est réalisée de régions candidates à régions candidates. Il est possible d'effectuer un recalage d'une image sur l'autre afin de faire coïncider les régions candidates sur les deux images de modalité différentes. Il est aussi possible de chercher directement les régions candidates localisées dans une même zone du récipient.

Le procédé selon l'invention vise à déterminer des critères de classification en rayonnement et en transmission, qui comprennent des critères en transmission qui prennent en compte les caractéristiques ti (en nombre n) des images en transmission et des critères en rayonnement infrarouge qui prennent en compte les caractéristiques ri (en nombre m) des images de rayonnement infrarouge, et/ou des critères composites qui prennent en compte des caractéristiques ci (en nombre q) combinant de manière logique ou mathématique des images en transmission et des images de rayonnement infrarouge. Ces caractéristiques sont par exemple des caractéristiques de position, de taille, de forme (concavité, périmètre, surface...) ou de photométrie (niveau moyen, contraste, variance, textures...).

Selon les exemples de réalisation illustrés aux figures 4 et 5, le procédé selon l'invention met en œuvre une opération ECt, ECr, EC d'extraction des critères de classification. Selon l'exemple de réalisation illustré à la figure 4, le procédé met en œuvre une opération ECt d'extraction des critères de classification pour la région candidate RTC, RTE, RTL des images en transmission permettant de définir un vecteur Ct de dimension n représentant n caractéristiques ti obtenues de l'image en rayonnement It pour chaque région candidate. De même, le procédé selon l'invention met en œuvre une opération ECr d'extraction des critères de classification pour la région candidate RRC, RRE, RRL des images en rayonnement infrarouge permettant de définir un vecteur Cr de dimension m représentant m caractéristiques ri obtenues de l'image en rayonnement Ir pour chaque région candidate.

Il est à noter que selon l'exemple de réalisation illustré à la figure 4, l'opération de mise en correspondance MC des régions candidates RTC, RTE, RTL des images en transmission avec des régions candidates RRC, RRE, RRL des images en rayonnement infrarouge permet d'obtenir un vecteur Cc de dimension n+m+q représentant n+m+q caractéristiques ti, ri et ci obtenues pour chaque région candidate mise en correspondance entre les images en transmission et les images en rayonnement infrarouge.

Dans l'exemple de réalisation illustré à la figure 5, le procédé selon l'invention met en œuvre une opération EC d'extraction des critères de classification en transmission et rayonnement pour la région candidate composite en transmission et rayonnement infrarouge RCC, RCE ou RCL, obtenue après l'opération de segmentation SR. Cette opération d'extraction permet d'obtenir un vecteur Cc de dimension n+m+q représentant n+m+q caractéristiques ti, ri et ci obtenues pour chaque région candidate mise en correspondance entre les images en transmission et les images en rayonnement infrarouge.

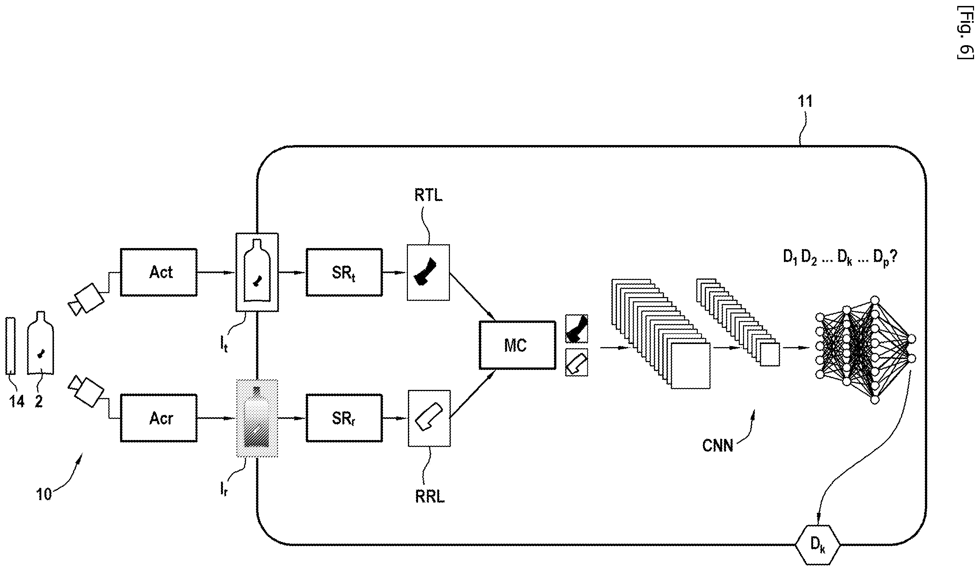

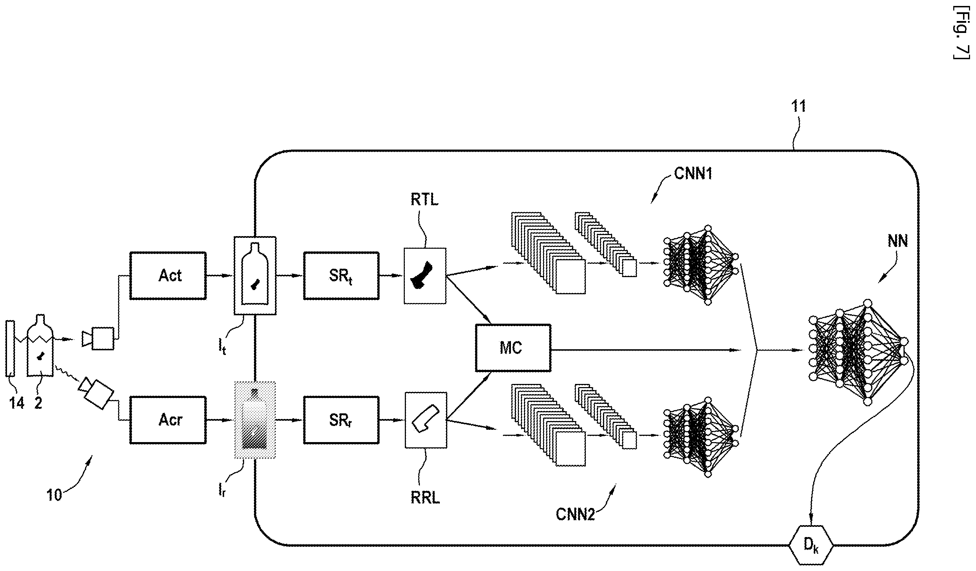

Dans les exemples de réalisation des figures 4 et 5, les critères de classification sont déterminés par une analyse préliminaire à savoir des connaissances métiers ou des études statistiques. Des algorithmes d'analyses d'images déterminent les caractéristiques ti, ri, ci de position, taille, forme et photométrie. Dans les exemples de réalisation illustrés aux figures 6 et 7, les critères de classification sont déterminés par apprentissage supervisé en étant enfouis dans des réseaux de neurones entrainés CNN, CNN1, CNN2. L'ensemble d'apprentissage contient des paires de régions candidates (RTC, RRC), (RTE, RRE), (RTL, RRL) selon les deux modalités d'inspection, avec comme étiquette, une classe d'objet parmi une liste de classes possibles telles que des types de défauts.

A l'aide des critères de classification en transmission et en rayonnement préalablement déterminés, le procédé classifie les défauts et par suite, les récipients porteurs de ces défauts. L'opération de classification permet de décider de la classe d'objet Dk de la région candidate ou du récipient parmi p classes possibles D1, D2, ...Dp. Si une région candidate est trouvée dans une seule des deux images selon une première modalité, on vient effectuer une analyse du défaut selon les critères associés au type d'image exploité mais également l'on prend en compte des critères associés à l'autre modalité : on effectue une analyse basée sur la fusion des critères associés aux deux types d'images. Le principe de l'invention repose sur la prise en compte des deux modalités d'inspection pour apporter une information supplémentaire et fiabilisée pour opérer la décision de classification des objets ou des récipients, et donc l'identification des défauts.

La décision de classification donne une classe d'appartenance Dk du récipient parmi p classes possibles. Les p classes sont principalement les types de défauts et concernent notamment les bulles, plis, rivières, frottoirs, peau d'orange, crevasses, ailettes, trapèzes, cols bouchés, bouillons, pierres, marques du joint de moule, ombres, décors, blasons, codes, minces, etc... Il peut être prévu plusieurs classes pour un même défaut si ce défaut présente des formes variées comme par exemple trapèze 1 et trapèze 2. Selon un exemple préféré de mise en œuvre, l'objet de l'invention vise à classifier chaque récipient selon au moins une classe d'objet parmi une liste de classes possibles contenant au moins des types de défauts, la liste de classes possibles comportant au moins: non défaut, trapèze, inclusion et bulle.

Dans les exemples de réalisation illustrés aux figures 4 et 5, le classifieur CI peut être par exemple, une machine à support de vecteurs (SVM), un classifieur bayésien ou un réseau de neurones NN (Neural Network). Le classifieur CI réalise la classification à l'aide des critères de classification en transmission et en rayonnement préalablement déterminés. Le classifieur CI est entrainé par des méthodes d'apprentissage supervisé consistant à déterminer des paramètres du classifieur à partir d'un ensemble d'objets ou d'images dont la classe est connue, dit ensemble d'apprentissage, et généralement également un ensemble de test. L'ensemble d'apprentissage comprend des paires de régions, de préférence des paires de vecteurs caractéristiques Ct, Cr associés à un type de défaut, soit {Ct, Cr, Dk}. Typiquement, le classifieur à apprentissage supervisé est entraîné par une base de données d'apprentissage constituée d'un ensemble d'enregistrements comportant chacun pour chaque récipient exemple observé:
- au moins une image de rayonnement du récipient, au moins une image en transmission du récipient et au moins une étiquette attribuant au récipient exemple au moins une classe d'objet parmi une liste de classes possibles telles que des types de défauts,
   ou
- au moins une région d'image de rayonnement du récipient exemple, au moins une région d'image en transmission du récipient exemple et au moins une étiquette attribuant à la région correspondante du récipient exemple au moins une classe d'appartenance parmi une liste de classes d'objets tels que des types de défauts.

Selon l'exemple de réalisation illustré à la figure 6, le classifieur est un réseau de neurones convolutif CNN (Convolutional Neural Network) ayant comme données d'entrée, une paire de régions candidates (RTC, RRC), (RTE, RRE) ou (RTL, RRL), obtenues après l'opération de mise en correspondance MC.

Selon l'exemple de réalisation illustré à la figure 7, le classifieur comporte un premier réseau de neurones convolutif CNN1 (Convolutional Neural Network) ayant comme données d'entrée, une région candidate en transmission (RTC, RTE, RTL) obtenue après l'opération SRt de segmentation et de détection de régions candidates sur les images en transmission It. Le classifieur comporte également un deuxième réseau de neurones convolutif CNN2 (Convolutional Neural Network) ayant comme données d'entrée, une région candidate en rayonnement infrarouge (RRC, RRE, RRL) obtenue après l'opération SRr de segmentation et de détection de régions candidates sur les images en rayonnement infrarouge Ir. Le premier réseau de neurones convolutif CNN1 et le deuxième réseau de neurones convolutif CNN2 travaillent chacun parallèlement respectivement sur une région candidate en transmission (RTC, RTE, RTL) et sur une région candidate en rayonnement infrarouge (RRC, RRE, RRL), ces deux régions selon les deux modalités, étant associées par l'opération de mise en correspondance MC selon les techniques expliquées ci-dessus.

Les sorties du premier réseau de neurones convolutif CNN1 et du deuxième réseau de neurones convolutif CNN2 sont les données d'entrée d'un classifieur par exemple de type SVM, Random Forest, bayésien, et de préférence un réseau de neurones NN, permettant de classifier selon les deux modalités. Les sorties du premier réseau de neurones convolutif CNN1 et du deuxième réseau de neurones convolutif CNN2 sont par exemple des hypothèses de classes d'appartenance mais il peut s'agir de données plus complexes avec des vecteurs de dimensions supérieures au nombre p de classes. L'ensemble d'apprentissage des réseaux de neurones contient des paires de régions candidates (RTC, RRC), (RTE, RRE), (RTL, RRL) selon les deux modalités d'inspection, avec comme étiquette, une classe d'objet parmi une liste de classes possibles telles que des types de défauts.

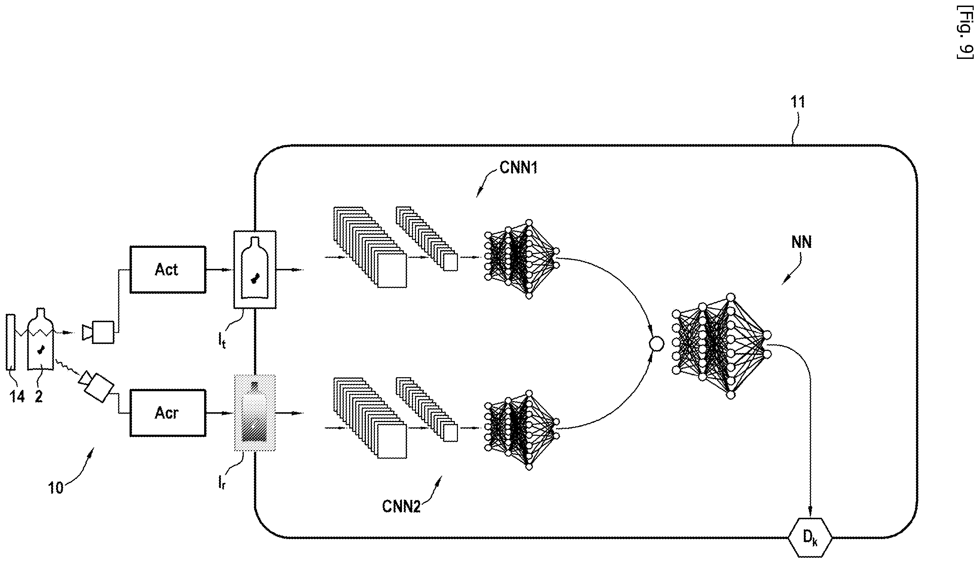

Selon un deuxième mode de réalisation mis en œuvre dans les exemples de réalisation des figures 8 et 9, les opérations d'analyse des images ne visent pas à en extraire, une région candidate mais à prendre en compte tout ou partie des images en transmission It et des images de rayonnement infrarouge Ir, sans la mise en œuvre d'une opération préalable de segmentation. Selon ces deux exemples de réalisation, les opérations d'analyse reposent sur la mise en œuvre de réseaux de neurones. Si des parties d'images seulement sont analysées, ces parties correspondent de préférence à une ou plusieurs régions d'intérêt du récipient telles que la bague, le col, l'épaule, le corps, le jable ou bien un demi-côté droit ou gauche ou une zone de présence de gravures.

Dans l'exemple de réalisation illustré à la figure 8, il est réalisé une opération MC de mise en correspondance d'une image en transmission It et d'une image en rayonnement Ir afin d'obtenir une image composite IC. L'image composite IC est obtenue par fusion d'au moins une image de rayonnement avec au moins une image de transmission d'un récipient ou par fusion de régions d'au moins une image en rayonnement avec des régions correspondantes d'au moins une image en transmission.

L'image en transmission It et l'image en rayonnement Ir sont prises lors des opérations d'acquisition Act, Acr réalisées par le système d'acquisition d'images 10, comme expliqué dans la description ci-dessus. Cette mise en correspondance MC des images pixel à pixel est réalisée comme expliqué dans l'exemple de réalisation de la figure 5. Cette image composite IC est utilisée comme données d'entrée d'un réseau de neurones convolutif CNN qui est apte par apprentissage, à prendre en compte les caractéristiques de position, taille, forme et photométrie qui sont significatives pour la classification prévue. L'ensemble d'apprentissage contient des images composites IC ou des régions d'images composites avec comme étiquette, une classe d'objet parmi une liste de classes possibles telles que des types de défauts. Les critères de classification en transmission et en rayonnement sont pris en compte dans les poids résultant de l'apprentissage et définissant le réseau de neurones convolutif CNN. Il est à noter que contrairement aux exemples des figures 5 et 6, l'opération de segmentation n'est pas nécessaire dans cette variante car les étages du réseau de neurones convolutif sont aptes par apprentissage, à classifier les images selon leur contenu sans segmentation préalable, et à déterminer localement les caractéristiques de position, taille, forme et photométrie qui sont significatives pour la classification. Mais une opération de segmentation est possible par exemple en remplaçant en figure 5 l'extraction de caractéristiques EC et le classifieur CL par un classifieur à base de réseau de neurones convolutif CNN.

Dans l'exemple de réalisation illustré à la figure 9, l'image en transmission It (en partie ou en totalité) prise par le système d'acquisition d'images 10, est utilisée comme données d'entrée d'un premier réseau de neurones convolutif CNN1 qui est apte par apprentissage, à déterminer les caractéristiques de position, taille, forme et photométrie qui sont significatives pour la classification prévue. L'image de rayonnement infrarouge Ir (en partie ou en totalité) prise par le système d'acquisition d'images 10, est utilisée comme données d'entrée d'un deuxième réseau de neurones convolutif CNN2 qui est apte par apprentissage, à déterminer les caractéristiques de position, taille, forme et photométrie qui sont significatives pour la classification prévue.

Le premier réseau de neurones convolutif CNN 1 et le deuxième réseau de neurones convolutif CNN2 travaillent chacun parallèlement sur deux images candidates dans chaque modalité. Les sorties du premier réseau de neurones convolutif CNN1 et du deuxième réseau de neurones convolutif CNN2 sont les données d'entrée d'un classifieur par exemple de type SVM, Random Forest, bayésien, et de préférence un réseau de neurones NN, permettant de classifier les récipients selon les deux modalités. Il est à noter que les deux images candidates dans chaque modalité sur lesquelles travaillent le premier réseau de neurones convolutif CNN1 et le deuxième réseau de neurones convolutif CNN2 sont associées à une opération de mise en correspondance.

Les sorties du premier réseau de neurones convolutif CNN1 et du deuxième réseau de neurones convolutif CNN2 sont par exemple des hypothèses de classes d'appartenance mais il peut s'agir de données plus complexes avec des vecteurs de dimensions supérieures au nombre p de classes. L'ensemble d'apprentissage des réseaux de neurones contient des paires d'images selon les deux modalités d'inspection, avec comme étiquette, une classe d'objet parmi une liste de classes possibles telles que des types de défauts. Les critères de classification en transmission et en rayonnement sont pris en compte dans les poids résultant de l'apprentissage et définissant les réseaux de neurones CNN1, CNN2 et NN. Il est à noter que contrairement à l'exemple de la figure 7, l'opération de segmentation n'est pas nécessaire dans cette variante car les étages du réseau de neurones convolutif sont aptes par apprentissage, à classifier les images selon leur contenu sans segmentation préalable, et à déterminer localement les caractéristiques de position, taille, forme et photométrie qui sont significatives pour la classification.

L'objet de l'invention est avantageusement exploité dans le cadre des installations de fabrication pour permettre une meilleure détection et catégorisation des défauts présents au sein des récipients formés encore chauds. Certains défauts peuvent être vus, détectés et catégorisés plus facilement selon une des deux modalités ou grâce à la combinaison des deux modalités.

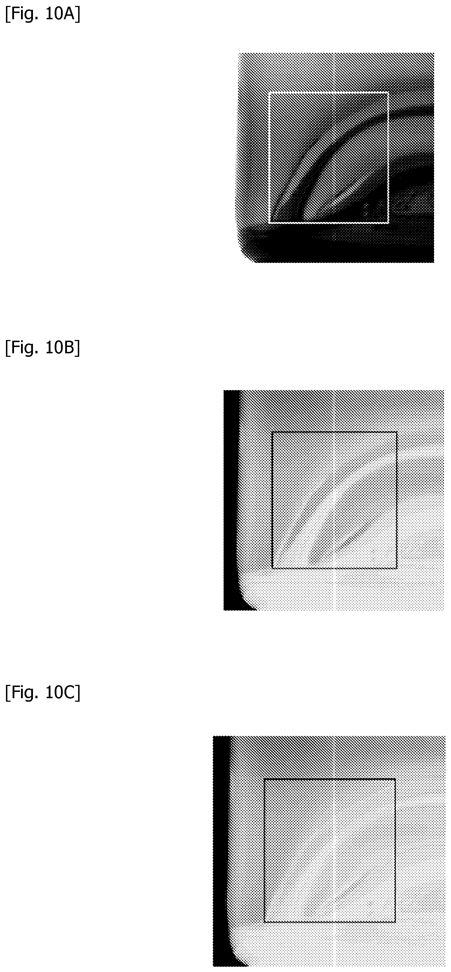

La figure 10A est une image simulée d'un défaut vu en transmission, au niveau de la piqûre d'un récipient tandis que les figures 10B et 10C sont des images simulées du même défaut vu en rayonnement infrarouge, s'il s'agit respectivement d'une cavité remplie ou de verre collé. Ce défaut donne l'impression d'un trapèze inclus dans une cavité moins absorbante. Un peu comme si une bulle d'air s'était formée entre la piqûre et son sommet, ne laissant qu'un fil de verre. Il pourrait également s'agir d'un autre morceau de verre, collé sur la paroi du récipient, ou accroché à la piqûre, à l'intérieur du récipient. Une image infrarouge permettrait potentiellement de confirmer ou non la présence d'un fil de verre, plus émetteur et d'une bulle d'air moins émettrice.

Dans le cas d'un fort changement de contraste pour la modalité transmission et d'un fort changement de contraste pour la modalité rayonnement infrarouge, il peut être conclu qu'il s'agit d'une accumulation de matière à cet endroit correspondant à un trapèze, contenu dans une bulle d'air (figure 10B). Dans le cas d'un fort changement de contraste pour la modalité transmission et d'un faible changement de contraste pour la modalité rayonnement infrarouge, il s'agit de deux morceaux de verre collés au niveau de la piqûre (figure 10C).

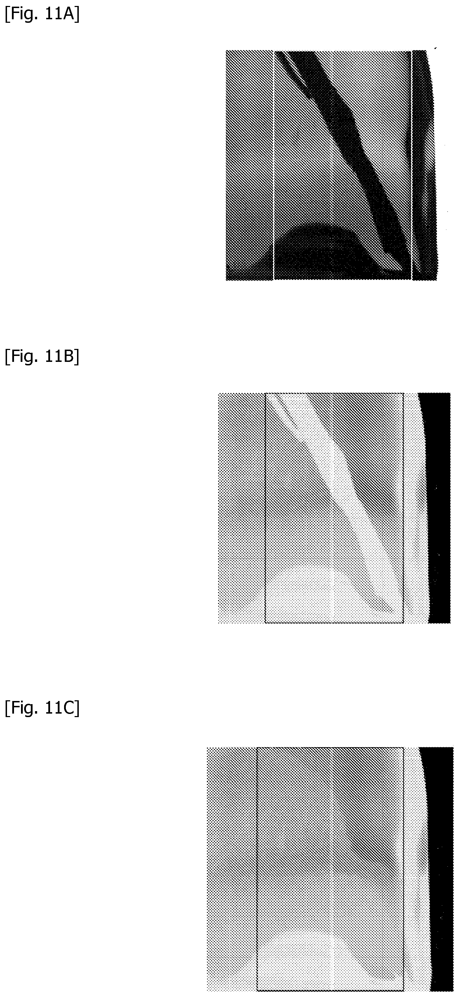

La figure 11A est une image d'un défaut vu en transmission tandis que les figures 11B et 11C sont des images simulées du même défaut vu en rayonnement infrarouge s'il s'agit respectivement d'un morceau de verre ou d'une tache de graisse. Il pourrait s'agir d'un défaut critique à savoir un trapèze c'est-à-dire un morceau de verre contenu dans le récipient. Mais il pourrait également s'agir d'une trace de graisse, à savoir d'un défaut superficiel, apparent sur la paroi du récipient. S'il s'agit d'un morceau de verre épais, contenu à l'intérieur du récipient, son rayonnement infrarouge va s'ajouter à celui des parois du récipient et monter en intensité. A l'inverse, s'il s'agit d'une simple tache de graisse, il ne devrait pas y avoir une grande différence entre le rayonnement infrarouge de la paroi du récipient et celui de défaut superficiel.

Dans le cas d'un fort changement de contraste pour la modalité transmission et un fort changement de contraste pour la modalité radiation infrarouge, il s'agit d'une accumulation de matière à cet endroit correspondant à un trapèze (figure 11B). Dans le cas d'un fort changement de contraste pour la modalité transmission et un faible changement de contraste pour la modalité radiation infrarouge, il s'agit d'un défaut absorbant la lumière visible, probablement une tache de graisse au niveau de la surface du récipient (figure 11C).

Les figures 12A, 13A, et 14A sont des images réelles obtenues avec une caméra infrarouge de technologie InGaAs, tandis que les figures 12B, 13B et 14B sont des images réelles des mêmes défauts vus en transmission, les acquisitions des images de récipient ayant été réalisées en sortie de machine de fabrication dans une usine de fabrication où sont installées des caméras selon le dispositif d'inspection conforme à l'invention.

La figure 12A est une image d'un défaut vu en rayonnement infrarouge tandis que la figure 12B est une image du même défaut vu en transmission. Selon l'art antérieur, le défaut constaté sur l'image en transmission de la figure 12B conduit à une incertitude quant à sa classe d'appartenance entre une pierre et un bouillon. Selon l'invention, l'image en rayonnement infrarouge montre un défaut qui a un rayonnement infrarouge correspondant à la présence de verre permettant de lever la confusion et de conclure à la présence d'une pierre.

La figure 13A est une image d'un défaut vu en rayonnement infrarouge tandis que la figure 13B est une image du même défaut vu en transmission. Le défaut de l'image en transmission laisse à penser à un défaut de pierre ou de bouillon. Toutefois, on voit sur l'image en rayonnement infrarouge que le défaut émet peu et est moins contrasté que sur la figure 12A. Le défaut est donc un bouillon.

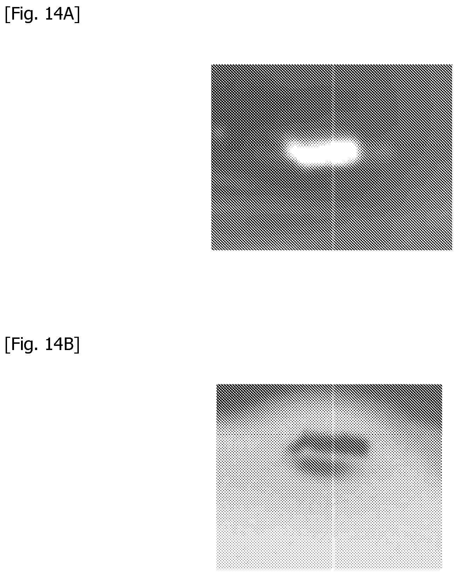

La figure 14A est une image d'un défaut vu en rayonnement infrarouge tandis que la figure 14B est une image du même défaut vu en transmission. Le défaut de l'image en transmission laisse à penser à un défaut de bouillon en raison de la transition claire au centre de la tache noire. Toutefois, on voit sur l'image en rayonnement infrarouge que l'ensemble du défaut rayonne de sorte que le défaut est une pierre.

Ces différents exemples montrent l'intérêt de l'objet de l'invention d'avoir recours à deux modalités d'inspection pour améliorer à la fois la détection et la classification des défauts. La deuxième modalité d'inspection permet de confirmer la classification du défaut, réalisée à l'aide de la première modalité ou de l'infirmer en permettant la classification du défaut dans une autre classe. Pour des défauts peu visibles dans une modalité, une image selon l'autre modalité apporte une information supplémentaire pour classifier correctement les défauts.

Il peut arriver que le signal d'un défaut soit faible selon les deux modalités considérées. Il est à noter que la transformation en une image composite peut permettre de révéler des objets qui étaient trop faiblement contrastés dans les deux modalités, mais qui, une fois la fusion effectuée, deviennent plus simples à repérer.

L'invention s'applique pour tout procédé de fabrication de récipients en verre, incluant bouteilles, pots, flacons, seringues, ampoules, verres de tables, jarres, assiettes. En effet, dans tous ces procédés de fabrication, il y a après formage, une étape longue de refroidissement des objets en verre et l'inspection et la reconnaissance des défauts au plus tôt est utile.

## Revendications

1. Procédé d'inspection de récipients en verre (2) encore chauds sortant d'une installation de fabrication (3) en vue d'identifier pour un récipient, un type de défauts, le procédé consistant pour chaque récipient:
- à acquérir au moins une image en transmission (It) du récipient illuminé par une source (14) d'une lumière traversant le récipient et au moins une image de rayonnement infrarouge (Ir) du récipient,
- à analyser au moins une image en transmission et au moins une image de rayonnement infrarouge,
- à assurer une mise en correspondance d'au moins une partie de l'image en transmission et d'au moins une partie de l'image de rayonnement infrarouge,
- à classifier le récipient, à partir d'au moins une image en transmission et d'au moins une image de rayonnement infrarouge, mises en correspondance, afin d'identifier pour un récipient, au moins un type de défauts.

2. Procédé d'inspection selon la revendication 1 selon lequel on illumine le récipient par une source de lumière (14) dont le spectre d'émission est dans une gamme de longueur d'onde inférieure à 0,8 µm, et on acquiert l'image de rayonnement infrarouge d'un récipient dans une gamme de longueur d'onde supérieur à 0,8 µm.

3. Procédé d'inspection selon l'une des revendications précédentes selon lequel on acquiert l'image de rayonnement infrarouge d'un récipient lorsque la source de lumière (14) est éteinte, ou
selon lequel on acquiert l'image de rayonnement infrarouge selon une direction d'observation telle qu'on ne capte pas avec le rayonnement infrarouge du récipient, la lumière émise par la source de lumière (14).

4. Procédé d'inspection selon l'une des revendications précédentes selon lequel, pour assurer la mise en correspondance des images en transmission et des images de rayonnement infrarouge, le procédé détecte des régions candidates dans les images en transmission et dans les images de rayonnement infrarouge, le procédé assurant, pour chaque récipient :
- une mise en correspondance des régions candidates (RTC, RTE, RTL) des images en transmission ou des régions candidates des images de rayonnement infrarouge (RRC, RRE, RRL) avec les régions correspondantes respectivement des images de rayonnement infrarouge et des images en transmission, en fonction de leur position sur le récipient,
- ou une mise en correspondance des régions candidates des images en transmission avec les régions candidates des images de rayonnement infrarouge.

5. Procédé d'inspection selon la revendication précédente selon lequel le procédé assure en tant que mise en correspondance, une fusion des images en transmission et des images de rayonnement infrarouge pour obtenir une image composite (IC), le procédé assurant :
- une extraction de caractéristiques de classification de l'image composite, exprimant des critères de classification en transmission et en rayonnement, et
- une classification du récipient à l'aide des critères de classification en transmission et en rayonnement ;
ou le procédé assurant :
- une segmentation des images composites pour détecter des régions candidates composites,
- une extraction de caractéristiques de classification des régions candidates composites, exprimant des critères de classification en transmission et en rayonnement, et
- une classification du récipient à l'aide des critères de classification en transmission et en rayonnement des régions candidates composites.

6. Procédé d'inspection selon l'une des revendications précédentes selon lequel :
- on extrait des images en transmission, des critères de classification en transmission,
- on extrait des images de rayonnement infrarouge, des critères de classification en rayonnement,
- on classifie le récipient à l'aide des critères de classification en transmission et en rayonnement.

7. Procédé d'inspection selon la revendication précédente selon lequel on choisit des critères de classification en rayonnement pour les images de rayonnement infrarouge et des critères de classification en transmission pour les images en transmission, et/ou des critères composites qui prennent en compte des caractéristiques combinant de manière logique ou mathématique des images en transmission et des images de rayonnement infrarouge, ces critères de classification en rayonnement et en transmission étant des critères de position, de taille, de forme ou de photométrie.

8. Procédé d'inspection selon l'une des revendications précédentes consistant à classifier le récipient par un classifieur à apprentissage supervisé dont les données d'entrées sont :
- les critères de classification en rayonnement et en transmission,
- ou les images de rayonnement et les images en transmission,
- ou des parties des images en rayonnement et des parties des images en transmission,
- ou au moins une image composite (IC) obtenue par fusion d'au moins une image de rayonnement avec au moins une image de transmission d'un récipient ou par fusion de régions d'au moins une image en rayonnement avec des régions correspondantes d'au moins une image en transmission.

9. Procédé d'inspection selon la revendication 8, consistant à classifier le récipient par un classifieur à apprentissage supervisé entraîné par une base de données d'apprentissage constituée d'un ensemble d'enregistrements comportant chacun pour un récipient exemple observé:
- au moins une image de rayonnement du récipient, au moins une image en transmission du récipient et au moins une étiquette attribuant au récipient exemple au moins une classe d'objets parmi une liste de classes possibles telles que des types de défauts,
ou
- au moins une région d'image de rayonnement du récipient exemple, au moins une région d'image en transmission du récipient exemple et au moins une étiquette attribuant à la région correspondante du récipient exemple au moins une classe d'objet parmi une liste de classes possibles telles que des types de défauts.

10. Procédé selon l'une des revendications précédentes selon lequel on vise à classifier chaque récipient selon au moins une classe d'objet parmi une liste de classes possibles contenant au moins des types de défauts, la liste de classes possibles comportant au moins: non défaut, trapèze, inclusion, bulle.

11. Procédé d'inspection selon l'une des revendications précédentes selon lequel est mise en œuvre une étape de prise en compte d'au moins un type de défaut détecté pour en déduire une information d'ajustement pour au moins un paramètre de contrôle de l'installation de fabrication.

12. Dispositif d'inspection de récipients (2) en verre encore chauds sortant d'une installation de fabrication (3) en vue d'identifier pour un récipient, un type de défauts, le dispositif comportant:
- un système (10) d'acquisition d'images en transmission des récipients et d'images de rayonnement infrarouge des récipients,
- une unité de traitement d'informations (11) reliée au système (10) d'acquisition d'images, cette unité de traitement d'informations (11) étant configurée pour comporter:
* un système d'analyse d'au moins une image en transmission et d'au moins une image de rayonnement infrarouge du récipient,
* un système de mise en correspondance d'au moins une région d'une image en transmission et d'au moins une région d'au moins une image de rayonnement infrarouge du récipient,
* un classifieur du récipient, à partir d'au moins une région d'au moins une image en transmission et d'au moins une région d'au moins une image de rayonnement infrarouge, mises en correspondance, afin d'identifier pour un récipient, au moins un type de défauts.

13. Dispositif selon la revendication 12 selon lequel le système (10) d'acquisition d'images en transmission des récipients et d'images de rayonnement infrarouge des récipients :
- comporte d'une part, une caméra (13) sensible au rayonnement infrarouge émis par les récipients et munie d'un objectif (13a) et d'autre part, une source (14) d'une lumière traversant les récipients et une caméra (15) sensible à la lumière transmise par les récipients et munie d'un objectif (15a), ou
- comporte un système (19) de sélection de la lumière émise par la source de lumière (14) et positionné pour éliminer, du rayonnement capté par la caméra sensible au rayonnement infrarouge, la lumière émise par la source de lumière, ou
- comporte :
- une source de lumière (14) illuminant les récipients,
- un capteur (13b) sensible au rayonnement infrarouge émis par les récipients,
- un capteur (15b) sensible à la lumière émise par la source de lumière (14) et transmise par les récipients,
- un objectif optique (18) commun de récupération du rayonnement infrarouge émis par les récipients et de la lumière transmise par les récipients, cet objectif optique (18) étant associé à un système optique de séparation et de filtration pour éliminer la lumière émise par la source de lumière, du rayonnement reçu par le capteur sensible au rayonnement infrarouge.

14. Dispositif selon l'une des revendications 12 à 13 selon lequel l'unité de traitement d'informations (11) est reliée :
- à un éjecteur pour commander l'éjection de récipients identifiés comme défectueux, et/ou
- une unité d'affichage pour présenter à un opérateur les défauts identifiés, les images en transmission et les images de rayonnement infra-rouge des récipients.

15. Dispositif selon l'une des revendications 12 à 14 selon lequel l'unité de traitement d'informations (11) est reliée à un calculateur de production (7) supervisant l'installation de fabrication (3) afin de :
- recevoir du calculateur de production, des informations temporelles permettant d'associer les récipients, leurs images et leurs défauts détectés au numéro de moule ou à la cavité de formage,
- transmettre au calculateur de production, les défauts identifiés et mesures effectuées, afin que le calculateur de production puisse déduire automatiquement une information d'ajustement pour au moins un paramètre de contrôle de l'installation de fabrication.

## Patentansprüche

1. Verfahren zur Inspektion von von noch heißen Glasbehältern (2), die aus einer Herstellungsanlage (3) kommen, zum Identifizieren eines Fehlertyps für einen Behälter, wobei das Verfahren für jeden Behälter umfasst:
• Erfassen von mindestens einem Durchlichtbild (It) des Behälters, beleuchtet durch eine Lichtquelle (14), deren Licht den Behälter durchdringt, und mindestens einem Infrarotstrahlungsbild (Ir) des Behälters,
• Analysieren von mindestens einem Durchlichtbild und mindestens einem Infrarotstrahlungsbild,
• Durchführen einer Zuordnung von mindestens einem Teil des Durchlichtbildes und mindestens einem Teil des Infrarotstrahlungsbildes,
• Klassifizieren des Behälters anhand von mindestens einem zugeordneten Durchlichtbild und mindestens einem zugeordneten Infrarotstrahlungsbild, um mindestens einen Fehlertyp zu identifizieren.

2. Inspektionsverfahren nach Anspruch 1, wobei der Behälter durch eine Lichtquelle (14) beleuchtet wird, deren Emissionsspektrum im Wellenlängenbereich unter 0,8 µm liegt, und das Infrarotstrahlungsbild im Wellenlängenbereich über 0,8 µm aufgenommen wird.

3. Inspektionsverfahren nach einem der vorhergehenden Ansprüche, wobei das Infrarotstrahlungsbild aufgenommen wird, wenn die Lichtquelle (14) ausgeschaltet ist, oder
wobei das Infrarotstrahlungsbild in einer Beobachtungsrichtung aufgenommen wird, sodass das von der Lichtquelle (14) emittierte Licht nicht im Infrarotstrahlungsbild des Behälters erfasst wird.

4. Inspektionsverfahren nach einem der vorhergehenden Ansprüche, wobei zur Durchführung der Zuordnung von Durchlichtbildern und Infrarotstrahlungsbildern Kandidatenregionen in den Bildern erkannt werden, wobei das Verfahren für jeden Behälter umfasst:
• Zuordnung der Kandidatenregionen (RTC, RTE, RTL) der Durchlichtbilder oder der Kandidatenregionen der Infrarotstrahlungsbilder (RRC, RRE, RRL) mit den jeweils entsprechenden Regionen der Infrarotstrahlungsbilder bzw. der Durchlichtbilder, basierend auf ihrer Position am Behälter,
• oder Zuordnung der Kandidatenregionen der Durchlichtbilder mit den Kandidatenregionen der Infrarotstrahlungsbilder.

5. Inspektionsverfahren nach dem vorhergehenden Anspruch, wobei die Zuordnung durch eine Fusion der Durchlichtbilder und der Infrarotstrahlungsbilder zu einem zusammengesetzten Bild (IC) erfolgt, wobei das Verfahren umfasst:
• Extraktion von Klassifikationsmerkmalen aus dem zusammengesetzten Bild, die Klassifikationskriterien in Durchlicht und Strahlung ausdrücken, und
• Klassifikation des Behälters anhand dieser Kriterien in Durchlicht und Strahlung;
oder das Verfahren umfasst:
• Segmentierung der zusammengesetzten Bilder zur Erkennung zusammengesetzter Kandidatenregionen,
• Extraktion von Klassifikationsmerkmalen aus diesen zusammengesetzter Kandidatenregionen, die Klassifikationskriterien in Durchlicht und Strahlung ausdrücken, und
• Klassifikation des Behälters anhand der die Klassifikationskriterien in Durchlicht und Strahlung dieser zusammengesetzter Kandidatenregionen.

6. Inspektionsverfahren nach einem der vorhergehenden Ansprüche, wobei:
• Klassifikationskriterien in Durchlicht aus den Durchlichtbildern extrahiert werden,
• Klassifikationskriterien in Strahlung aus den Infrarotstrahlungsbildern extrahiert werden,
• der Behälter anhand der Klassifikationskriterien in Durchlicht und Strahlung klassifiziert wird.

7. Inspektionsverfahren nach dem vorhergehenden Anspruch, wobei Klassifikationskriterien in Strahlung für die Infrarotstrahlungsbilder und Klassifikationskriterien in Durchlicht für die Durchlichtbilder und/oder zusammengesetzte Kriterien, die Merkmale berücksichtigen, welche Durchlichtbilder und Infrarotstrahlungsbilder logisch oder mathematisch miteinander kombinieren, gewählt werden, wobei die Klassifikationskriterien in Strahlung und Durchlicht Positions-, Größen-, Form- oder photometrische Kriterien sind.

8. Inspektionsverfahren nach einem der vorhergehenden Ansprüche, wobei der Behälter durch einen überwachter Klassifikator klassifiziert wird, dessen Eingabedaten sind:
• die Klassifikationskriterien in Strahlung und Durchlicht,
• oder die Strahlungsbilde und die Durchlichtbilde,
• oder Teile der Strahlungsbilder und Teile der Durchlichtbilder,
• oder mindestens ein zusammengesetztes Bild (IC), das durch Fusion von mindestens einem Strahlungsbild mit mindestens einem Durchlichtbild eines Behälters oder durch Fusion von Regionen aus mindestens einem Strahlungsbild mit entsprechenden Regionen aus mindestens einem Durchlichtbild erzeugt wurde.

9. Inspektionsverfahren nach Anspruch 8, wobei der überwachter Klassifikator durch eine Trainingsdatenbank trainiert wurde, die für jeden Beispielbehälter umfasst:
• mindestens ein Strahlungsbild, mindestens ein Durchlichtbild und mindestens ein Label, das dem Beispielbehälter Objektklasse aus einer Liste möglicher Klassen wie Fehlertypen zuweist, oder
• mindestens eine Region des Strahlungsbildes des Beispielbehälters, mindestens eine Region des Durchlichtbildes des Beispielbehälters und mindestens ein Label, das der entsprechenden Region des Beispielbehälters mindestens eine Objektklasse aus einer Liste möglicher Klassen wie Fehlertypen zuweist.

10. Verfahren nach einem der vorhergehenden Ansprüche, wobei jeder Behälter mindestens einer Objektklasse aus einer Liste möglicher Klassen zugeordnet wird, die mindestens Fehlertypen enthält, wobei die Liste möglicher Klassen mindestens umfasst: kein Fehler, Affenschaukel, Einschlüsse, Blase.

11. Verfahren nach einem der vorhergehenden Ansprüche, wobei mindestens ein erkannter Fehlertyp berücksichtigt wird, um eine Anpassungsinformation für mindestens einen Steuerparameter der Herstellungsanlage abzuleiten.

12. Inspektionsvorrichtung für noch heiße Glasbehälter (2), die aus einer Herstellungsanlage (3) kommen, zur Identifikation eines Fehlertyps für einen Behälter, wobei die Vorrichtung umfasst:
• ein System (10) zur Aufnahme von Durchlichtbildern und Infrarotstrahlungsbildern des Behälters,
• eine Informationsverarbeitungseinheit (11), die mit dem Bildaufnahmesystem (10) verbunden ist, konfiguriert mit:
∘ ein Analysesystem für mindestens ein Durchlichtbild und mindestens ein Infrarotstrahlungsbild des Behälters,
∘ o ein Zuordnungssystem für mindestens eine Region eines Durchlichtbildes und mindestens eine Region eines Infrarotstrahlungsbildes des Behälters,
∘ o einen Klassifikator für den Behälter anhand von mindestens einer Region eines Durchlichtbildes und mindestens einer Region eines Infrarotstrahlungsbildes, die zugeordnet wurden, zur Identifizierung mindestens eines Fehlertyps für einen Behälter.

13. Vorrichtung nach Anspruch 12, wobei das Bildaufnahmesystem (10) für Durchlichtbilder und Infrarotstrahlungsbilder der Behälter:
• einerseits eine Kamera (13) umfasst, die empfindlich für die von den Behältern emittierte Infrarotstrahlung ist und mit einem Objektiv (13a) ausgestattet ist, und andererseits eine Lichtquelle (14), deren Licht die Behälter durchdringt, sowie eine Kamera (15), die empfindlich für das durch die Behälter übertragene Licht ist und mit einem Objektiv (15a) ausgestattet ist, oder
• ein System (19) zur Auswahl des von der Lichtquelle (14) emittierten Lichts umfasst, das so positioniert ist, dass es das von der infrarotempfindlichen Kamera erfasste Licht von der Lichtquelle entfernt, oder
• umfasst:
∘ eine Lichtquelle (14), die die Behälter beleuchtet,
∘ einen Sensor (13b), der empfindlich für die von den Behältern emittierte Infrarotstrahlung ist,
∘ einen Sensor (15b), der empfindlich für das von der Lichtquelle (14) emittierte und durch die Behälter übertragene Licht ist,
∘ ein gemeinsames optisches Objektiv (18) zur Erfassung der von den Behältern emittierten Infrarotstrahlung und des durch die Behälter übertragenen Lichts, wobei dieses optische Objektiv (18) mit einem optischen Trenn- und Filtersystem verbunden ist, um das von der Lichtquelle emittierte Licht aus dem von dem infrarotempfindlichen Sensor empfangenen Strahlung zu entfernen.

14. Vorrichtung nach einem der Ansprüche 12 bis 13, wobei die Informationsverarbeitungseinheit (11) verbunden ist:
• mit einem Auswerfer zur Steuerung des Auswurfs von als fehlerhaft identifizierten Behältern, und/oder
• mit einer Anzeigeeinheit zur Darstellung der identifizierten Fehler, der Durchlichtbilder und der Infrarotstrahlungsbilder der Behälter für einen Bediener.

15. Vorrichtung nach einem der Ansprüche 12 bis 14, wobei die Informationsverarbeitungseinheit (11) mit einem Produktionsrechner (7) verbunden ist, der die Herstellungsanlage (3) überwacht, um:
• vom Produktionsrechner Zeitinformationen zu empfangen, die eine Zuordnung der Behälter, ihrer Bilder und der erkannten Fehler zur Formnummer oder zur Formkavität ermöglichen,
• dem Produktionsrechner die identifizierten Fehler und durchgeführten Messungen zu übermitteln, damit der Produktionsrechner automatisch eine Anpassungsinformation für mindestens einen Steuerparameter der Herstellungsanlage ableiten kann.

## Claims

1. Method for inspecting glass containers (2) still hot and exiting a manufacturing facility (3) to identify, for a container, a type of defect, the method comprising, for each container:
∘ acquiring at least one transmission image (It) of the container illuminated by a light source (14) emitting light passing through the container, and at least one infrared radiation image (Ir) of the container,
∘ analyzing at least one transmission image and at least one infrared radiation image,
∘ performing a matching of at least a portion of the transmission image and at least a portion of the infrared radiation image,
∘ classifying the container, based on at least one matched transmission image and at least one matched infrared radiation image, to identify at least one type of defect for a container.

2. Inspection method according to claim 1, wherein the container is illuminated by a light source (14) whose emission spectrum is in a wavelength range below 0.8 µm, and the infrared radiation image of the container is acquired in a wavelength range above 0.8 µm.

3. Inspection method according to any of the preceding claims, wherein the infrared radiation image of a container is acquired when the light source (14) is turned off, or
wherein the infrared radiation image is acquired in an observation direction such the light emitted by the light source (14) is not captured with the infrared radiation of the container.

4. Inspection method according to any of the preceding claims, wherein, to perform the matching of transmission images and infrared radiation images, the method detects candidate regions in the transmission images and in the infrared radiation images, the method performing, for each container:
∘ a matching of candidate regions (RTC, RTE, RTL) of the transmission images or candidate regions of the infrared radiation images (RRC, RRE, RRL) with the corresponding regions of the infrared radiation images and transmission images, respectively, based on their position on the container,
∘ or a matching of candidate regions of the transmission images with candidate regions of the infrared radiation images.

5. Inspection method according to the preceding claim, wherein the matching comprises a fusion of the transmission images and the infrared radiation images to obtain a composite image (IC), the method performing:
∘ an extraction of classification features from the composite image, expressing classification criteria in transmission and radiation, and
∘ a classification of the container using the classification criteria in transmission and radiation;
or the method performing:
∘ a segmentation of the composite images to detect composite candidate regions,
∘ an extraction of classification features from the composite candidate regions, expressing classification criteria in transmission and radiation,
∘ a classification of the container using the classification criteria in transmission and radiation from the composite candidate regions.

6. Inspection method according to any of the preceding claims, wherein:
∘ classification criteria in transmission are extracted from the transmission images,
∘ classification criteria in radiation are extracted from the infrared radiation images,
∘ the container is classified using the classification criteria in transmission and radiation.

7. Inspection method according to the preceding claim, wherein classification criteria in radiation are selected for the infrared radiation images and classification criteria in transmission for the transmission images, and/or composite criteria that logically or mathematically combine features from transmission and infrared radiation images, these classification criteria in radiation and transmission being criteria of position, size, shape, or photometry.

8. Inspection method according to any of the preceding claims, wherein the container is classified by a supervised learning classifier whose input data are:
∘ the classification criteria in radiation and transmission,
∘ or the radiation and transmission images,
∘ or parts of the radiation and transmission images,
∘ or at least one composite image (IC) obtained by fusing at least one radiation image with at least one transmission image of a container or by fusing regions of at least one radiation image with corresponding regions of at least one transmission image.

9. Inspection method according to claim 8, wherein the container is classified by a supervised learning classifier trained on a training database comprising a set of records, each including, for an observed example container:
∘ at least one radiation image of the container, at least one transmission image of the container, and at least one label assigning the example container to at least one object class among a list of possible classes such as defect types, or
∘ at least one radiation image region of the example container, at least one transmission image region of the example container, and at least one label assigning the corresponding region of the example container to at least one object class among a list of possible classes such as defect types.

10. Method according to any of the preceding claims, wherein each container is classified into at least one object class among a list of possible classes including at least: no defect, birdswing, inclusion, bubble.

11. Inspection method according to any of the preceding claims, wherein a step is implemented to take into account at least one detected defect type to deduce adjustment information for at least one control parameter of the manufacturing facility.

12. Device for inspecting glass containers (2) still hot and exiting a manufacturing facility (3) to identify, for a container, a type of defect, the device comprising:
• an image acquisition system (10) for acquiring transmission images and infrared radiation images of the containers,
• an information processing unit (11) connected to the image acquisition system (10), the information processing unit (11) being configured to include:
∘ an analysis system for at least one transmission image and at least one infrared radiation image of the container,
∘ a matching system for at least one region of a transmission image and at least one region of at least one infrared radiation image of the container,
∘ a classifier for the container, based on at least one region of at least one transmission image and at least one region of at least one infrared radiation image, matched, to identify at least one type of defect.

13. Device according to claim 12, wherein the image acquisition system (10) for transmission and infrared radiation images of the containers:
• comprises, on one hand, a camera (13) sensitive to infrared radiation emitted by the containers and equipped with a lens (13a), and on the other hand, a light source (14) emitting light passing through the containers and a camera (15) sensitive to the transmitted light and equipped with a lens (15a), or
• comprises a light selection system (19) positioned to eliminate, from the radiation captured by the infrared-sensitive camera, the light emitted by the light source (14), or
• comprises:
∘ a light source (14) illuminating the containers,
∘ a sensor (13b) sensitive to infrared radiation emitted by the containers,
∘ a sensor (15b) sensitive to the light emitted by the light source (14) and transmitted through the containers,
∘ a common optical lens (18) for collecting infrared radiation emitted by the containers and light transmitted through the containers, this optical lens (18) being associated with an optical separation and filtering system to eliminate the light emitted by the light source from the radiation received by the infrared-sensitive sensor.

14. Device according to any of claims 12 to 13, wherein the information processing unit (11) is connected:
• to an ejector to command the ejection of containers identified as defective, and/or
• to a display unit to present to an operator the identified defects, the transmission images, and the infrared radiation images of the containers.

15. Device according to any of claims 12 to 14, wherein the information processing unit (11) is connected to a production computer (7) supervising the manufacturing facility (3) to:
• receive temporal information from the production computer allowing the association of containers, their images, and detected defects with the mold number or forming cavity,
• transmit to the production computer the identified defects and measurements performed, so that the production computer can automatically deduce adjustment information for at least one control parameter of the manufacturing facility.
